(19) Europäisches Patentamt
European Patent Office
Office européen des brevets

(11) EP 0 768 563 A1

# (12) EUROPÄISCHE PATENTANMELDUNG

(43) Veröffentlichungstag:
**16.04.1997 Patentblatt 1997/16**

(51) Int. Cl.[6]: **G02F 1/35**

(21) Anmeldenummer: **96116058.7**

(22) Anmeldetag: **08.10.1996**

(84) Benannte Vertragsstaaten:
**DE FR GB**

(30) Priorität: **12.10.1995 DE 19537969**

(71) Anmelder: **HOECHST AKTIENGESELLSCHAFT**
**65929 Frankfurt am Main (DE)**

(72) Erfinder:
- **Lupo, Donald, Dr.**
  **60316 Frankfurt (DE)**
- **Salbeck, Josef, Dr.**
  **65779 Kelkheim (DE)**

## (54) Verwendung von Spiroverbindungen als Werkstoffe in der nicht-linearen Optik

(57) Spiroverbindungen der allgemein Formel (I),

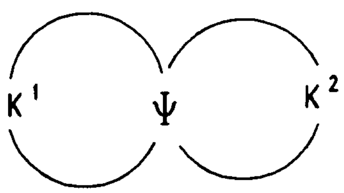

(I),

wobei Ψ C, Si, Ge oder Sn, und $K^1$ und $K^2$ unabhängig voneinander konjugierte Systeme bedeuten, eignen sich als Werkstoffe in der nicht-linearen Optik.

EP 0 768 563 A1

## Beschreibung

Die Erfindung betrifft die Verwendung von löslichen, amorphen, konjugierten spiroverknüpften Oligomeren und Polymeren als Werkstoffe für die nichtlineare Optik. Sie betrifft ferner optische Lichtwellenleiter, die aus diesen Verbindungen bestehen oder diese enthalten und nichtlineare optische Effekte aufweisen sowie nichtlinear-optische Bauelemente, die auf solchen Lichtwellenleitern beruhen.

Der Begriff "nichtlineare Optik" beschreibt Phänomene und deren Anwendung, die vorwiegend bei der Wechselwirkung zwischen hohen Lichtintensitäten oder hohen elektrischen Feldstärken und speziellen Werkstoffen auftreten. Diese Effekte beruhen auf der Polarisation der Materie durch ein elektrisches Feld. Diese kann in einer Potenzreihe dargestellt werden:

$$P = \chi^{(1)}E + \chi^{(2)}E^2 + \chi^{(3)}E^3 + ....$$

Die $\chi^{(n)}$ sind die sogenannten elektrischen Suzeptibilitätsfunktionen. **E** ist das elektrische Feld, und kann mehrere Frequenzkomponente enthalten und daher aus Licht oder einer Spannung oder einer Kombination daraus bestehen. Die Suszeptibilität ist mit der sogenannten molekularen Hyperpolarisierbarkeit verknüpft:

$$\chi^{(2)} \sim N\beta; \chi^{(3)} \sim N\gamma,$$

wobei N die Dichte der aktiven Moleküle ist und β und γ die Hyperpolarisierbarkeiten 2. und 3. Ordnung darstellen. Üblicherweise nehmen die Suszeptibilitäten mit zunehmender Potenz ab, daher werden nichtlinear-optische (NLO) Effekte erst bei hohen Feldstärken sichtbar. Ferner sind alle Suszeptibilitäten gerader Ordnung gleich Null, wenn die einzelnen Moleküle im Werkstoff zentrosymmetrisch angeordnet sind oder die Moleküle selber Inversionssymmetrie aufweisen.

Effekte 3. Ordnung, die auch in Systemen mit Inversionssymmetrie vorkommen, sind z.B. die 4-Wellen Mischung, bei der Lichtstrahlen mit drei verschiedenen Frequenzen einen Lichtstrahl mit einer vierten Frequenz bilden. Für Anwendungen interessant ist vor allem die entartete 4-Wellen-Mischung, bei der alle 4 Strahlen dieselbe Frequenz haben. Diese führt zum sogenannten optischen Kerr-Effekt, bei dem der Brechungsindex des Werkstoffs nicht nur von der Wellenlänge, sondern auch von der Intensität des Lichtstrahls abhängt. Auf Basis des Kerr-Effekts können Echtzeit-Hologramme erstellt werden oder rein optische Schaltelemente entwickelt werden, die sich prinzipiell für den Einsatz in optischen Computern eignen.

Insbesondere für optische Schaltelemente ist es vorteilhaft und häufig notwendig, daß die NLO-aktiven Werkstoffe als Lichtwellenleiter entweder in einer Lichtleitfaser oder als planare Wellenleiter auf einem Substrat eingesetzt werden. Zum einen erlaubt eine Wellenleiter-Anordnung den Aufbau von integrierten optischen Bauelementen, zum anderen bewirkt der Wellenleiter, daß die Lichtintensität und daher die Feldstärke über einen längeren Weg hoch bleibt und die NLO Effekte größer sind. Dieses kann aber nur erreicht werden, wenn die optischen Verluste im Wellenleiter, die aufgrund von Absorption und Lichtstreuung auftreten, möglichst klein sind. Beispiele für Bauelemente auf Basis NLO-aktiver Lichtwellenleiter sind opto-optische Koppler, Mach-Zehnder-Interferometer, modenselektive Koppler und Prismenkoppler, die in der Nachrichtentechnik oder für optische Computer eingesetzt werden können.

Diese und andere Bauelemente und Anwendungen, die z.B. von G. Stegeman et al. in Nonlinear Optical Effects in Organic Polymers, S. 257-276 (Dordrecht: Kluwer, 1989) beschrieben werden, sind unter Verwendung von konjugierten Spiroverbindungen Gegenstand der Erfindung, die aber nicht auf diese genannten Bauelemente und Anwendungen beschränkt ist.

Lichtwellenleiter können nur sinnvoll für Anwendungen in der nichtlinearen Optik eingesetzt werden, wenn die optischen Verluste, die aufgrund von Absorption und Lichtstreuung auftreten, möglichst gering sind. Ein ideales Material für den Einsatz in der NLO 3. Ordnung soll bei der gewünschten Einsatzwellenlänge möglichst wenig absorbieren und ferner eine homogene, vorzugsweise eine amorphe Struktur aufweisen, um Lichtstreuung zu vermindern. Ferner soll der Werkstoff gut verarbeitbar und optisch, chemisch und thermisch stabil sein.

Für Effekte 3. Ordnung haben sich konjugierte Polymere und Oligomere, z.B. Poly(phenylenvinylen), Poly(diacetylen) oder Sexi(thiophen) als interessante Werkstoffe mit relativ hohen Suzeptibilitäten 3. Ordnung erwiesen. Beispiele konjugierter organischer Materialien für die nichtlineare Optik 3. Ordnung werden von G.H. Cross in Nonlinear Optical Materials, S. 189-225 (London: Blackie Academic and Professional, 1993) und von D. Neher in Advan. Mater. **7**, 8, S. 691-702 (1995) beschrieben. Die bisher zur Verfügung stehenden Substanzen können aber alle obenstehende Bedingungen nicht gleichzeitig erfüllen. Viele der Verbindungen, z.B. Poly(thiophene), Poly(aniline) oder Poly(phenylenvinylene) sind stark gefärbt und daher für Wellenleiter im sichtbaren Bereich nicht geeignet. Die Poly(arylenenvinylene) sind zudem häufig gegen Sauerstoff und Licht empfindlich. Konjugierte Polymere und Oligomere sind ferner üblicherweise unlöslich oder schlecht löslich, daher mit typischen Beschichtungsverfahren aus der Lösung schlecht verarbeitbar, und bilden häufig polykristalline, lichtstreuende Schichten. Dies trifft besonders für farblose Verbindungen, wie Poly(phenylene), zu. Das deswegen häufig verwendete Verfahren, mit langkettigen Substituenten die Löslichkeit zu erhöhen und Kristallisation zu unterdrücken, bringt als Nachteil eine Verdünnung der aktiven Einheiten und eine Minderung der NLO

Suszeptibilität mit sich. Zudem wird dadurch die mechanische Stabilität der Filme beeinträchtigt.

Es wurde überraschend gefunden, daß sich die im folgenden beschriebenen monomeren und polymeren Spiro- und Heterospiroverbindungen gut als Werkstoffe für die nicht-lineare Optik eignen, da sie die oben genannten Nachteile nicht aufweisen, weil sie lösliche, stabile und amorphe Substanzen darstellen und gleichzeitig eine gute nichtlinear optische Aktivität und geringe optische Verluste aufweisen.

Gegenstand der Erfindung ist daher die Verwendung von Spiroverbindungen der allgemeinen Formel (I)

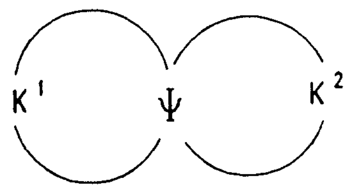

(I),

wobei Ψ C, Si, Ge oder Sn, vorzugsweise C, Si oder Ge, besonders bevorzugt C oder Si und insbesondere C und $K^1$ und $K^2$ unabhängig voneinander konjugierte Systeme bedeuten, als Werkstoffe in der nicht-linearen Optik.

Spiroverbindungen sind Verbindungen in denen zwei Ringsysteme durch ein einziges, vierbindiges Atom verknüpft sind. Dieses Atom wird als Spiroatom bezeichnet, wie in Handbook of Chemistry and Physics 62$^{nd}$ ed. (1981-2). CRC Press, S. C-23 bis C-25 ausgeführt ist.

Bevorzugte Verbindungen der Formel (I) sind 9,9'-Spirobifluorenderivate der Formel (II)

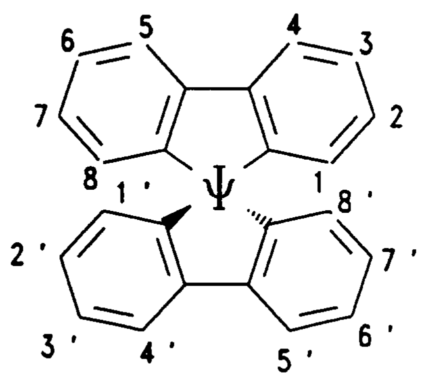

(II)

wobei Ψ die oben angegebenen Bedeutungen hat und wobei die Benzogruppen unabhängig voneinander substituiert und/oder anelliert sein können.

Besonders bevorzugt sind Spirobifluorenderivate der Formel (III),

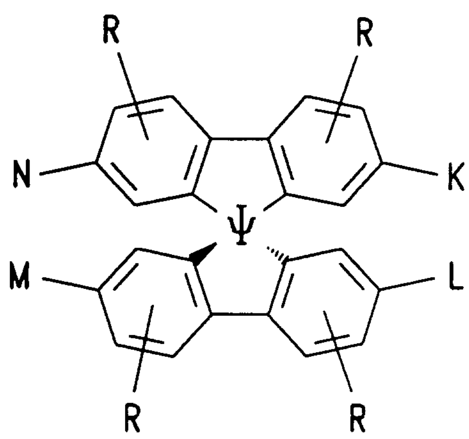

(III)

wobei die Symbole und Indizes folgende Bedeutungen haben:

Ψ ist C, Si, Ge oder Sn, vorzugsweise C, Si, Ge, besonders bevorzugt C, Si, insbesondere C,

K, L, M, N sind gleich oder verschieden und bedeuten eine Gruppe der Formeln

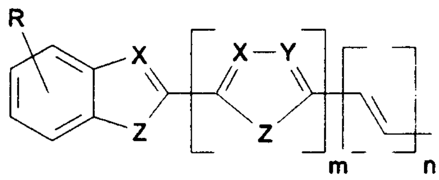

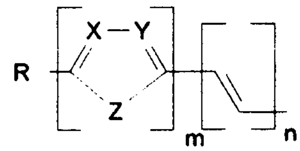

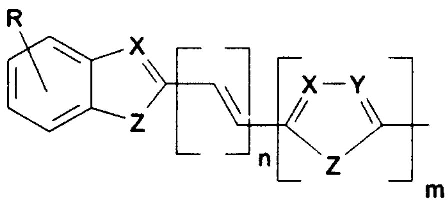

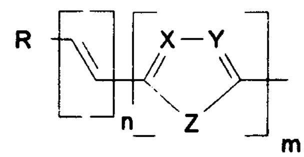

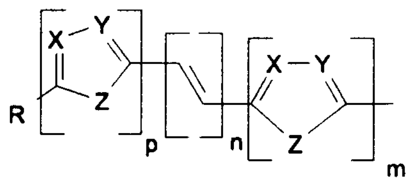

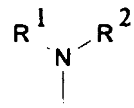

- R: hat, gleich oder verschieden, die gleichen Bedeutungen wie K, L, M, N haben oder ist Wasserstoff, eine lineare oder verzweigte Alkyl-, Alkoxy-, Sulfid, Sulfon oder Carboalkoxygruppe mit 1 bis 22, vorzugsweise 1 bis 15, besonders bevorzugt 1 bis 12 C-Atomen, -CN, $-NO_2$, $-NR^1R^2$, Halogen, -Ar oder -O-Ar;
- Ar: ist Phenyl, Biphenyl, 1-Naphthyl, 2-Naphthyl, 2-Thienyl, 2-Furanyl, wobei jede dieser Gruppen einen oder zwei Reste R tragen kann;
- m, n, p: sind 0, 1, 2 oder 3;
- X, Y: sind =CR- oder =N-;
- Z: ist -O-, -S-, -NR-, -CRR-, -CH=CH-, -CH=N-;
- $R^1$ und $R^2$: sind Wasserstoff, eine lineare oder verzweigte Alkylgruppe mit 1 bis 22 C-Atomen, -Ar oder 3-Methylphenyl.

Bevorzugte Verbindungen der Formel (III) sind solche der Formel (IIIa)-(IIIg)

IIIa) K = L = M = N und ist eine Gruppe der Formeln:

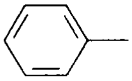 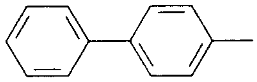 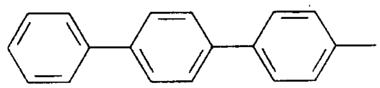 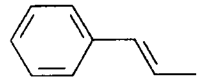

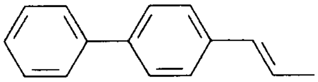 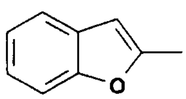 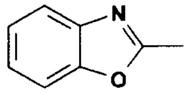 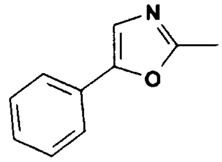

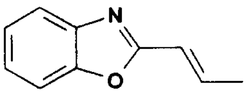 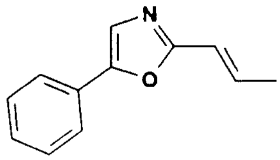 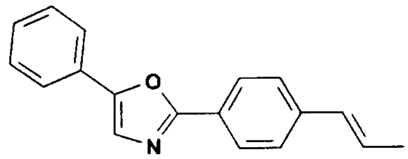

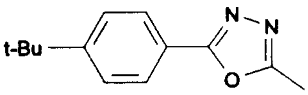 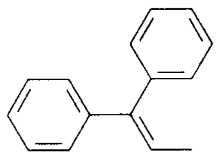 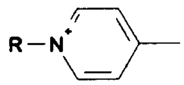

R = $C_1$-$C_{22}$-Alkyl, $C_2H_4SO_3^-$

IIIb) K = M = H und N = L und ist eine Gruppe der Formeln:

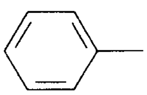 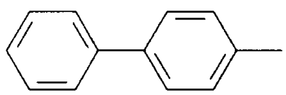 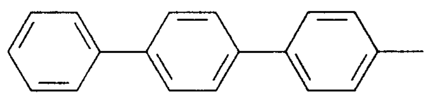

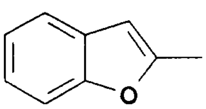 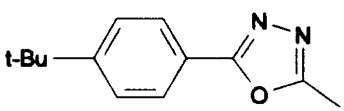 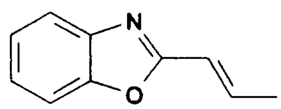

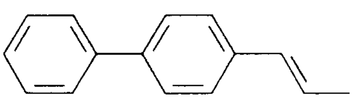 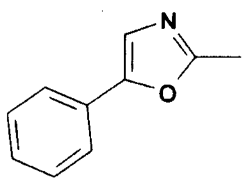 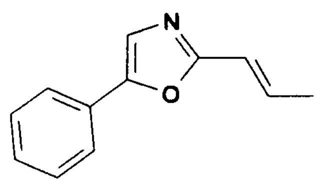

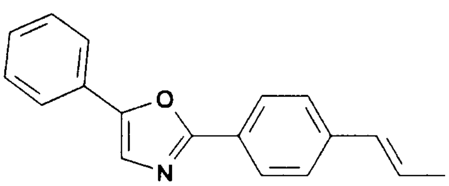 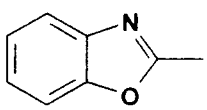 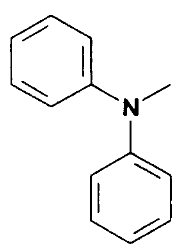

IIIc) K = M und ist eine Gruppe der Formeln:

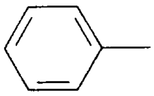
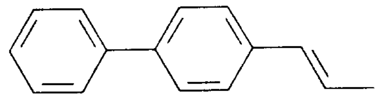
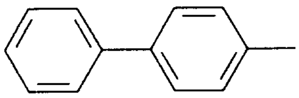
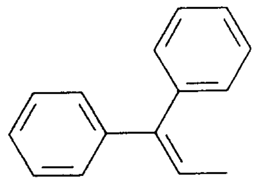
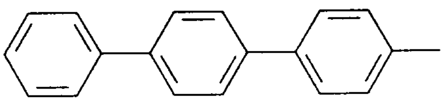
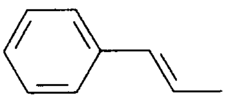
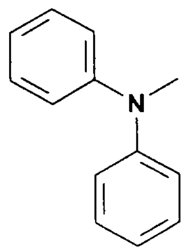
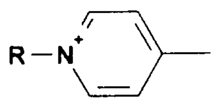

R = $C_1$-$C_2$-Alkyl, $C_2H_4SO_3^-$
und N = L und ist eine Gruppe der Formeln:

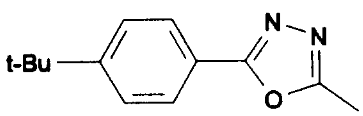
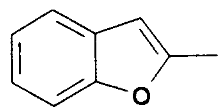
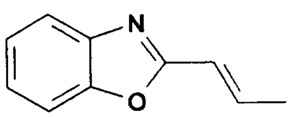
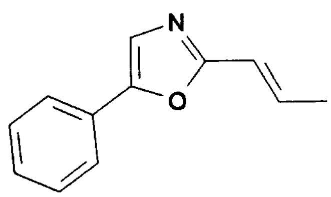
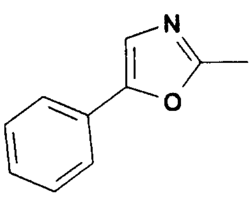
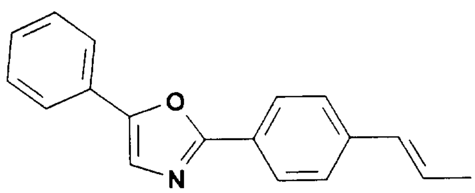
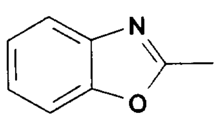

IIId) K = M und ist eine Gruppe der Formeln:

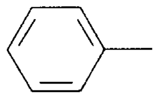

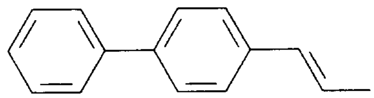

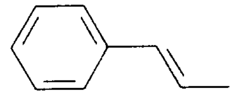

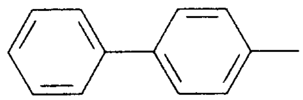

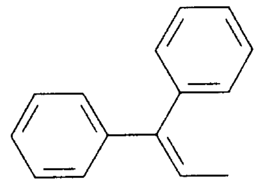

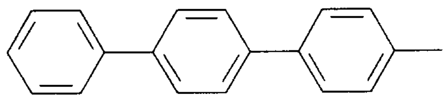

und N = L und ist eine Gruppe der Formeln:

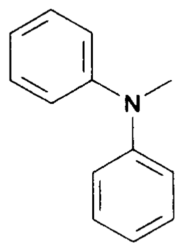

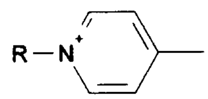

R = $C_1$-$C_{22}$-Alkyl, $C_2H_4SO_3^-$

IIIe) K = L = H und M = N und ist eine Gruppe der Formeln:

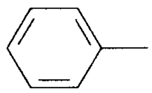
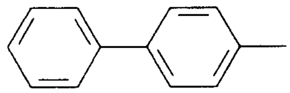
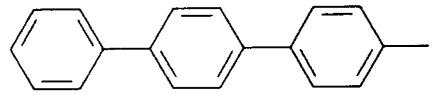
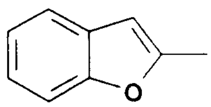
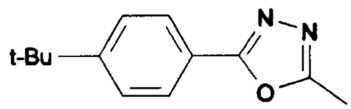
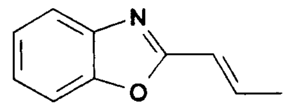
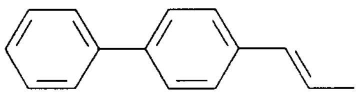
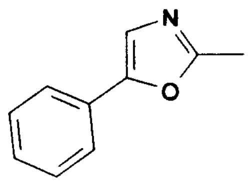
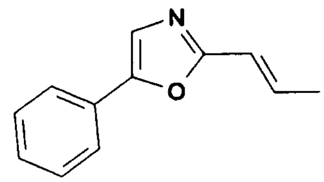
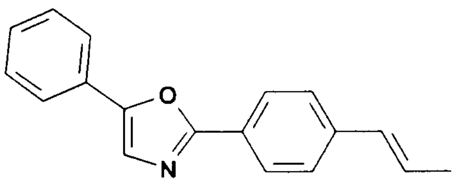
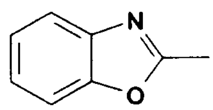
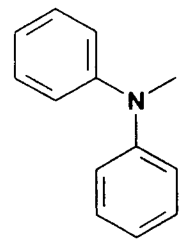

IIIf) K = L und ist eine Gruppe der Formeln:

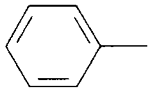

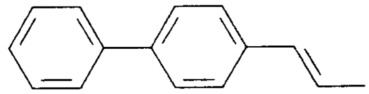

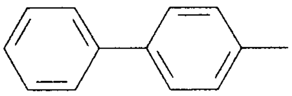

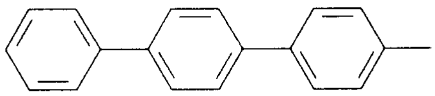

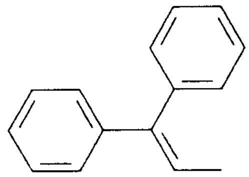

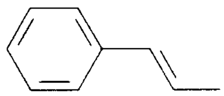

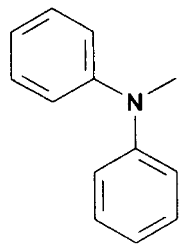

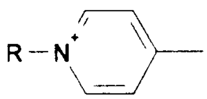

R = $C_1$-$C_{22}$-Alkyl, $C_2H_4SO_3^-$
und M = N und ist eine Gruppe der Formeln:

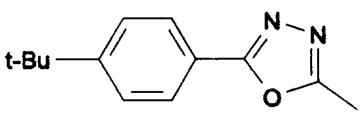

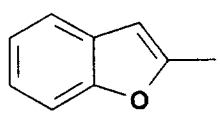

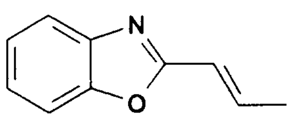

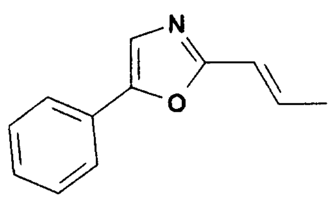

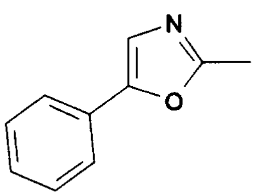

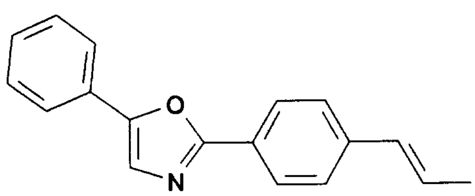

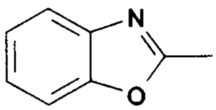

IIIg) K = L und ist eine Gruppe der Formeln:

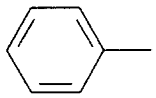
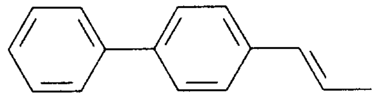
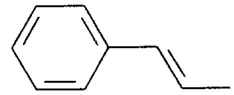

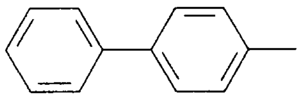
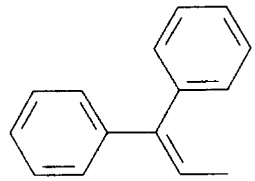

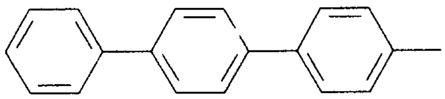

und M =N und ist eine Gruppe der Formeln:

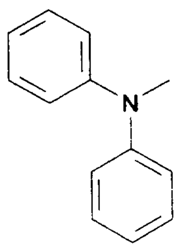
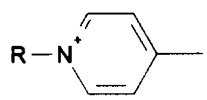

R = $C_1$-$C_{22}$-Alkyl, $C_2H_4SO_3^-$

Besonders bevorzugte Verbindungen der Formel (III) sind solche der Formeln (IIIaa) bis (IIIdb):

(IIIaa) K = L = M = N und ist eine Gruppe der Formeln:

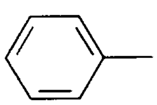
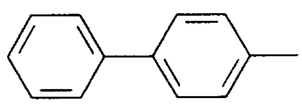
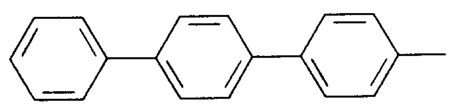

(IIIba) K = M = H und N = L und ist eine Gruppe der Formeln:

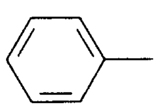
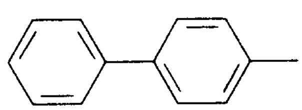
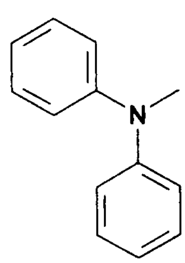

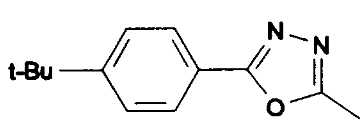

(IIIca) K = M und ist eine Gruppe der Formeln:

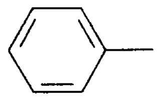

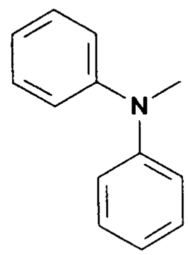

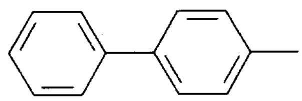

und N = L und ist:

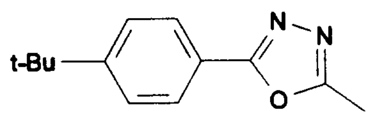

(IIIda) K = M und ist eine Gruppe der Formeln:

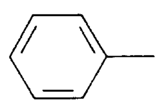

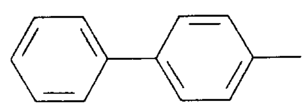

und N = L und ist:

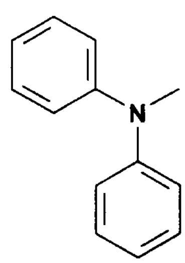

(IIIab) K = L = M = N und ist eine Gruppe der Formeln:

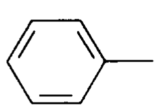

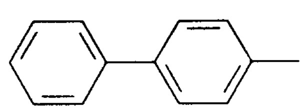

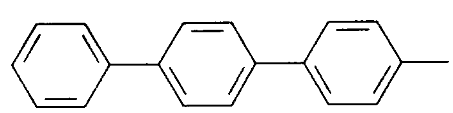

(IIIbb) K = L = H und M = N und ist eine Gruppe der Formeln:

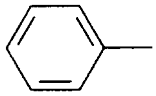
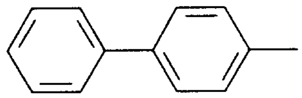
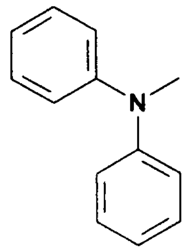
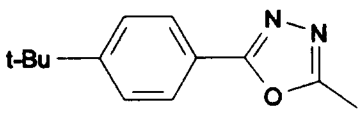

(IIIcb) K = L und ist eine Gruppe der Formeln:

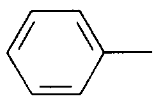
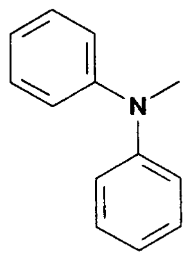
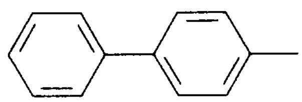

und M = N und ist:

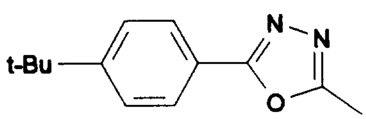

(IIIdb) K = L und ist eine Gruppe der Formeln:

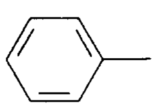
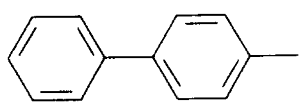

und M = N und ist:

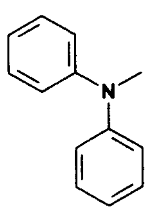

Ganz besonders bevorzugte Spiroverbindungen sind solche der Formel (IV),

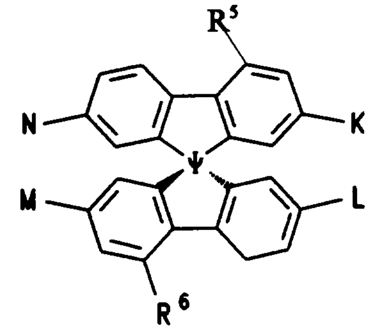

(IV) ,

wobei die Symbole folgende Bedeutungen haben:
Ψ ist C oder Si, vorzugsweise C;
K, L, M und N sind gleich oder verschieden eine der Gruppen G1 bis G14:

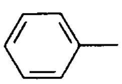
G1
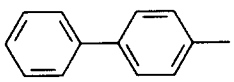
G2
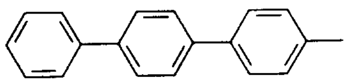
G3
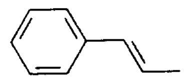
G4
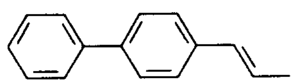
G5
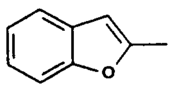
G6
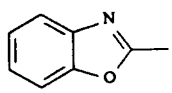
G7
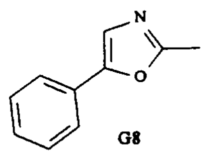
G8
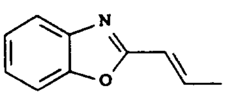
G9
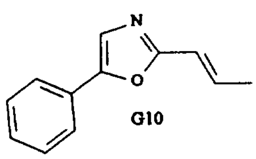
G10
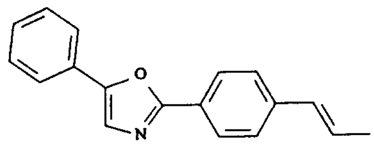
G11
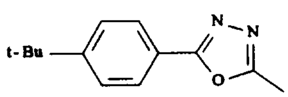
G12
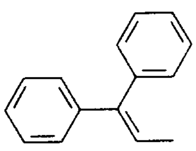
G13
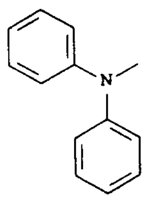
G14

und $R^5$, $R^6$ können auch gleich oder verschieden Wasserstoff oder eine lineare oder verzweigte Alkyl-, Alkyloxy- oder Estergruppe mit 1 bis 22 C-Atomen, -CN oder -$NO_2$ bedeuten.

Insbesondere bevorzugte Spiroverbindungen der Formel (IV) sind
2,2',4,4',7,7'-Hexakis(biphenylyl)-9,9'-spirobifluoren,
2,2',4,4',7,7'-Hexakis(terphenylyl)-9,9'-spirobifluoren,
2,2',4,4'-Hexakis(biphenylyl)-9,9'-spirobi-9-silafluoren und
2,2',4,4',7,7'-Hexakis(terphenylyl)-9,9'-spirobi-9-silafluoren.

Die Herstellung der erfindungsgemäß verwendeten Spiro- und Heterospiroverbindungen erfolgt nach an sich bekannten Methoden, wie sie in der EP-A 0 676 461 und Standardwerken zur Organischen Synthese, z.B. Houben-Weyl, Methoden der Organischen Chemie, Georg-Thieme-Verlag, Stuttgart und in den entsprechenden Bänden der Serie "The Chemistry of Heterocyclic Compounds" von A. Weissberger und E. C. Taylor (Herausgeber) beschrieben werden.

Die Herstellung erfolgt dabei unter Reaktionsbedingungen, die für die genannten Umsetzungen bekannt und geeignet sind. Dabei kann auch von an sich bekannten, hier nicht näher erwähnten Varianten Gebrauch gemacht werden.

a) Spiroverbindungen

Verbindungen der Formel (III) werden beispielsweise ausgehend vom 9,9'-Spirobifluoren erhalten, dessen Synthese z.B. von R. G. Clarkson, M. Gomberg, (1930), J. Am. Chem. Soc. 52, 2881, beschrieben ist.

Die Herstellung von Verbindungen der Formel (IIIa) kann beispielsweise ausgehend von einer Tetrahalogenierung in den Positionen 2,2',7,7' des 9,9'-Spirobifluorens und anschließender Substitutionsreaktion erfolgen (siehe z.B. US 5,026,894) oder über eine Tetraacetylierung der Positionen 2,2',7,7' des 9,9'-Spirobifluorens mit anschließender C-C-Verknüpfung nach Umwandlung der Acetylgruppen in Aldehydgruppen oder Heterocyclenaufbau nach Umwandlung der Acetylgruppen in Carbonsäuregruppen erfolgen.

Die Herstellung von Verbindungen der Formel (IIIb) kann beispielsweise analog zu denen der Formel IIIa erfolgen, wobei die stöchiometrischen Verhältnisse bei der Umsetzung so gewählt werden, daß die Positionen 2,2' bzw. 7,7' funktionalisiert werden (siehe z.B. J. H. Weisburger, E. K. Weisburger, F. E. Ray, J. Am. Chem. Soc. 1959, 72, 4253; F. K. Sutcliffe, H. M. Shahidi, D. Paterson, J. Soc. Dyers Colour 1978, 94, 306 und G. Haas, V. Prelog, Helv. Chim. Acta 1969, 52 1202).

Die Herstellung von Verbindungen der Formel (IIIc) kann beispielsweise über eine Dibromierung in 2,2'Stellung und anschließender Diacetylierung in 7,7' Stellung des 9,9'-Spirobifluorens und anschließende Umsetzung analog zu der der Verbindungen (IIIa) erfolgen.

Verbindungen der Formeln (IIIe)-(IIIg) sind beispielsweise durch Wahl geeignet substituierter Ausgangsverbindungen beim Aufbau des Spirobifluorens herstellbar, z.B. kann 2,7-Dibromspirobifluoren aus 2,7-Dibromfluorenon und 2,7-Dicarbethoxy-9,9-spirobifluoren durch Einsatz von 2,7-Dicarbethoxyfluorenon aufgebaut werden. Die freien 2',7'-Positionen des Spirobifluorens können dann unabhängig weiter substituiert werden.

Für die Synthese der Gruppen K, L, M, N, sei beispielsweise verwiesen auf

DE-A 23 44 732, 24 50 088, 24 29 093, 25 02 904, 26 36 684, 27 01 591 und 27 52 975 für Verbindungen mit 1,4-Phenylen-Gruppen;

DE-A 26 41 724 für Verbindungen mit Pyrimidin-2,5-diyl-Gruppen;

DE-A 40 26 223 und EP-A 03 91 203 für Verbindungen mit Pyridin-2,5-diyl-Gruppen;

DE-A 32 31 462 für Verbindungen mit Pyridazin-3,6-diyl-Gruppen; N. Miyaura, T. Yanagi und A. Suzuki in Synthetic Communications 1981, 11, 513 bis 519,

DE-A-39 30 663; M. J. Sharp, W. Cheng, V. Snieckus, Tetrahedron Letters 28 1987, 5093; G. W. Gray, J. Chem. Soc. Perkin Trans II 1989, 2041, und Mol. Cryst. Liq. Cryst. 1989, 172, 165; Mol. Cryst. Liq. Cryst. 1991, 204, 43 und 91; EP-A 0 449 015; WO 89/12039; WO 89/03821; EP-A 0 354 434 für die direkte Verknüpfung von Aromaten und Heteroaromaten.

Die Herstellung disubstituierter Pyridine, disubstituierter Pyrazine, disubstituierter Pyrimidine und disubstituierter Pyridazine findet sich beispielsweise in den entsprechenden Bänden der Serie "The Chemistry of Heterocyclic Compounds" von A. Weissberger und E. C. Taylor (Herausgeber).

b) Heterospiroverbindungen

Solche Verbindungen der Formel (III) werden beispielsweise ausgehend vom Bis-[biphenyl-2,2'-diyl]silan ( = 9,9'-Spirobi(9H-)-silafluoren) (V) erhalten, dessen Synthese z.B. von H. Gilman, R. D. Gorsich, J. Am. Chem. Soc. 1958, 80, 3243, beschrieben ist.

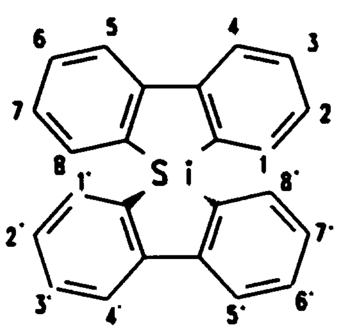

(V)

Die Herstellung von Heterospiroverbindungen der Formel (IIIa) kann beispielsweise ausgehend von einer Tetrahalogenierung in den Positionen 2,2',7,7' des 9,9'-Spirobi-9-silafluorens und anschließender Substitutionsreaktion erfolgen, die von analogen C-Spiroverbindungen bekannt ist (siehe z.B. US 5,026,894) oder über eine Tetraacetylierung der Positionen 2,2',7,7' des 9,9'-Spirobi-9-silafluorens mit anschließender C-C-Verknüpfung nach Umwandlung der Acetylgruppen in Aldehydgruppen oder Heterocyclenaufbau nach Umwandlung der Acetylgruppen in Carbonsäuregruppen erfolgen.

Die Herstellung von Verbindungen der Formel (IIIb) kann beispielsweise analog zu denen der Formel (IIIa) erfolgen, wobei die stöchiometrischen Verhältnisse bei der Umsetzung so gewählt werden, daß die Positionen 2,2' bzw. 7,7' funktionalisiert werden (siehe z.B. J. H. Weisburger, E. K. Weisburger, F. E. Ray, J. Am. Chem. Soc. 1959, 72, 4253; F. K. Sutcliffe, H. M. Shahidi, D. Paterson, J. Soc. Dyers Colour 1978, 94, 306 und G. Haas, V. Prelog, Helv. Chim. Acta 1969, 52, 1202).

Die Herstellung von Verbindungen der Formel (IIIc) kann beispielsweise über eine Dibromierung in 2,2'-Stellung mit anschließender Diacetylierung in 7,7'-Stellung des 9,9'-Spirobi-9-silafluorens und anschließender Umsetzung analog zu der der Verbindungen (IIIa) erfolgen.

Verbindungen der Formel (IIIe)-(IIIg) sind beispielsweise herstellbar durch Wahl geeignet substituierter Ausgangsverbindungen beim Aufbau des Spirosilabifluorens entsprechend den beiden folgenden Reaktionsschemata:

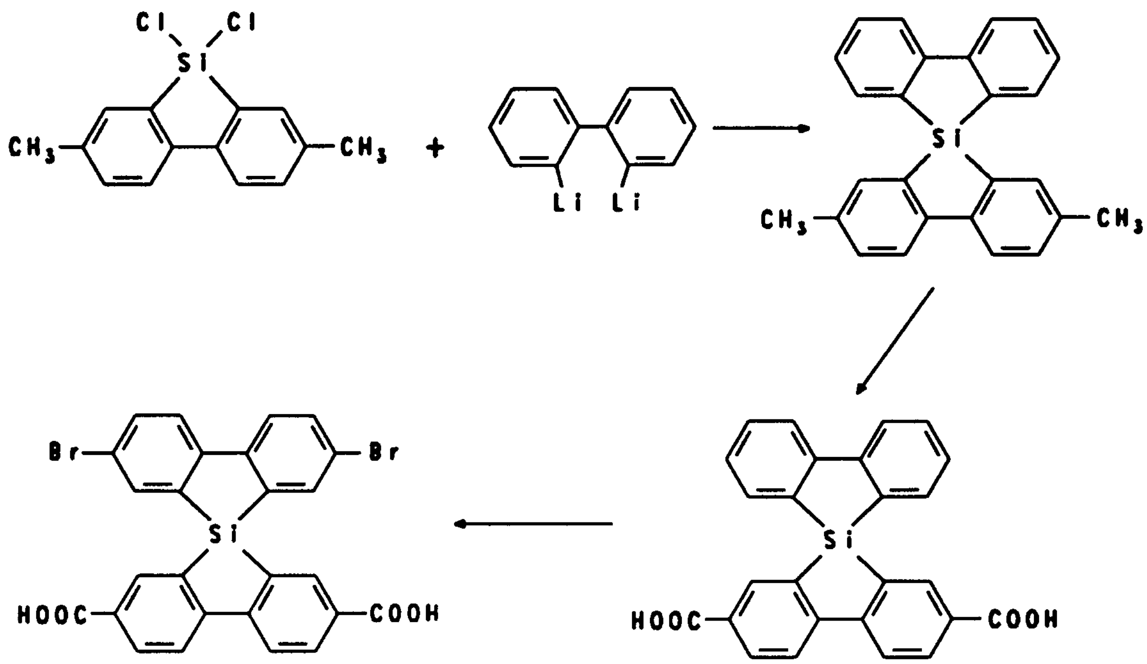

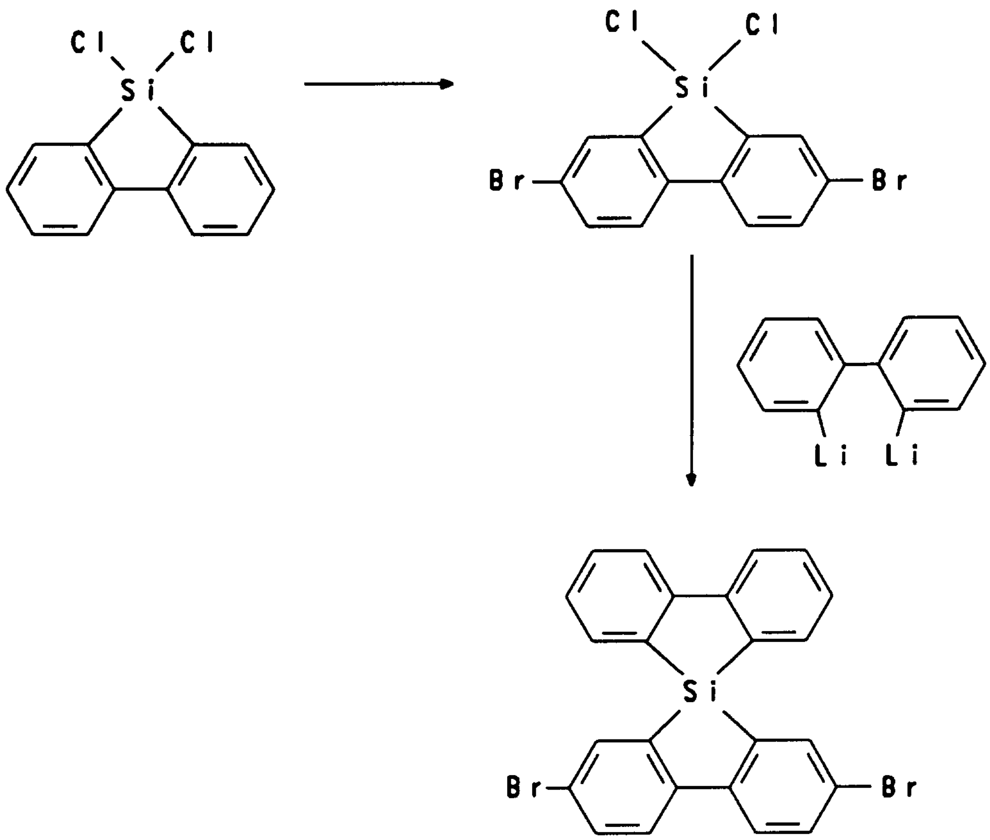

Darüber hinaus sind die dem Fachmann geläufigen Synthesesequenzen wie Nitrierung, Reduzierung, Diazotierung und Sandmeyer-Reaktion einzusetzen. Für die Synthese der Gruppen K, L, M, Q sei auf die entsprechenden Carbospiroverbindungen verwiesen.

Ein weiterer Gegenstand der Erfindung ist die Verwendung von konjugierten Polymeren, enthaltend Wiederholeinheiten der Formel (VI), als Werkstoff für die nichtlineare Optik,

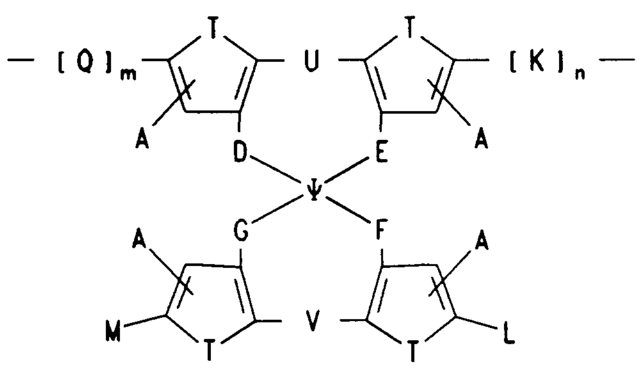

(VI)

wobei die Symbole und Indizes in der Formel (VI) folgende Bedeutungen haben:

| | |
|---|---|
| Ψ | ist Sn, Ge, Si, C, besonders bevorzugt C oder Si, ganz besonders bevorzugt C; |
| D, E, F, G | sind gleich oder verschieden, und bedeuten $-CR^1R^2-$, -O-, -S-, $-NR^3-$ oder eine chemische Bindung; wobei $R^1$, $R^2$, $R^3$ $C_1$-$C_{20}$-Alkyl oder H bedeuten, und wobei $R^1$ und $R^2$ gemeinsam einen gegebenenfalls substituierten Cycloalkyl-Ring bilden können; |
| U | ist $-CR^4=CR^5-$ oder eine chemische Bindung; |

V hat die Bedeutung von U oder ist $-CR^1R^2-$, -O-, -S-, $-NR^3-$, $-SiR^1R^2-$, $-SO_2-$, -SO-, -CO-, wobei $R^1$, $R^2$, $R^3$ die oben angegebene Bedeutung haben und $R^4$ $R^5$ die Bedeutung von $R^1$, $R^2$, $R^3$ haben oder Fluor oder $CF_3$ sind;

A ist Wasserstoff, $C_1$-$C_{20}$-, vorzugsweise $C_1$-$C_{15}$-Alkyl, der auch Heteroatome, wie -O-, -N oder Fluor enthalten kann, besonders bevorzugt eine lineare, verzweigte oder Cyclen enthaltende Alkyl-, Alkoxy- oder Alkyloxycarbonylgruppe, $-CF_3$, -CN, $-NO_2$, $-NR^6R^7$, -Ar, -O-Ar;

$R^6$ und $R^7$ sind Wasserstoff, ein $C_1$-$C_{20}$-Kohlenwasserstoffrest der aliphatisch, aromatisch, linear, verzweigt oder alicyclisch sein kann, wobei $R^6$ mit $R^7$ gemeinsam einen Ring bilden können, vorzugsweise sind $R^6$ und $R^7$ Methyl, Ethyl, t-Butyl, cyclo-Hexyl, 3-Methylphenyl oder zusammen

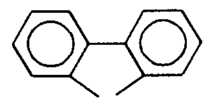 ;

Ar ist ein aromatischer Rest mit bis zu 22 C-Atomen, vorzugsweise Phenyl, Biphenyl, 1-Naphthyl, 2-Naphthyl, 2-Thienyl, 2-Furanyl, wobei jeder dieser Gruppen Ar einen oder zwei Reste der Bedeutung A tragen kann;

T ist -O-, -S-, $-NR^3-$, $-CR^1R^2-$, CH=N-, -CA=CA-, -CH=CA-, -CH=CF- oder -CF=CF-, wobei $R^1$, $R^2$, $R^3$ und A die oben angegebene Bedeutung haben, vorzugsweise ist T -CH=CH-;

K, L, M, Q sind gleich oder verschieden konjugierte Elektronensysteme enthaltende Kohlenwasserstoffreste, die auch Heteroatome enthalten können, wobei K, L, M, Q auch mit den jeweils ortho-stehenden Gruppen A zu einem Ring zusammengeschlossen sein können, der gesättigt, partiell ungesättigt oder maximal ungesättigt ist, wobei in solchen Fällen bevorzugt ein anelliertes aromatisches Ringsystem vorliegt,

L, M können auch H, ein nichtkonjugierter Kohlenwasserstoff mit vorzugsweise 1-20 C-Atomen, der auch Heteroatome enthalten kann, Halogen, CN, $NO_2$, eine Amino, Alkylamino oder Dialkylaminogruppe sein;

m,n sind 0, 1, 2 oder 3.

Bevorzugt sind konjugierte Polymere, enthaltend Wiederholeinheiten der Formel (VII),

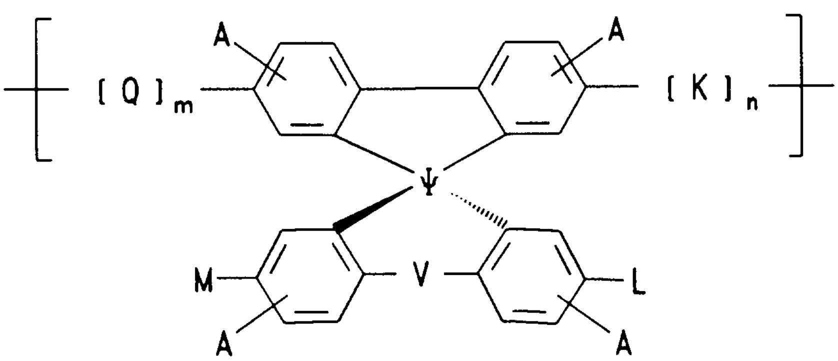

(VII)

wobei die Symbole und Indizes folgende Bedeutung haben:

Ψ ist Sn, Ge, Si oder C;

Q, K, L, M sind gleich oder verschieden jeweils eine bis fünfzehn gleiche oder verschiedene Arylen- und/oder Heteroarylen- und/oder Vinylengruppen, die gegebenenfalls substituiert sein können;

L, M können auch H, ein nicht konjugierter Kohlenwasserstoff mit vorzugsweise 1-20 C-Atomen, der auch Heteroatome enthalten kann, Halogen, CN, $NO_2$, eine Amino, Alkylamino oder Dialkylaminogruppe sein.

A ist wie bei Formel VI definiert;

m, n sind 0 oder 1.

Die Polymere der Formel (VI) und (VII) weisen im allgemeinen 2 bis 1000, vorzugsweise 2 bis 500, besonders

bevorzugt 2 bis 100, Wiederholeinheiten auf.

Bevorzugt sind weiterhin solche Polymere, bei denen die Symbole und Indizes in der allgemeinen Formel (VII) folgende Bedeutungen haben:

A — ist gleich oder verschieden $R^1$, $R^2$, $R^3$ und/oder $R^4$;

Q, K — sind gleich oder verschieden konjugierte $C_2$ bis $C_{100}$ Kohlenwasserstoffreste, insbesondere Gruppen der Formeln

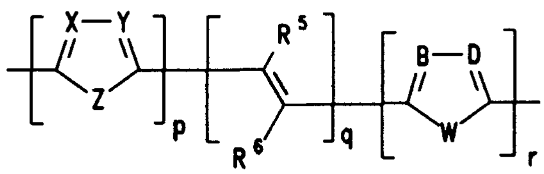
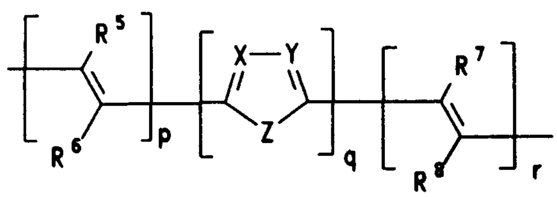
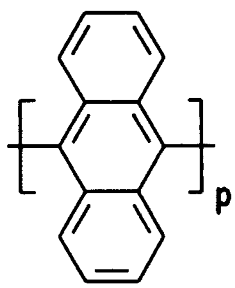
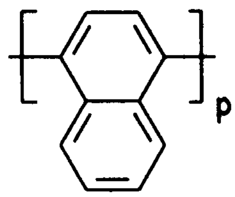
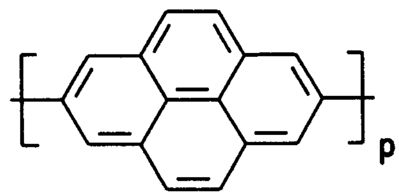
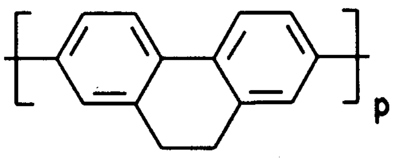
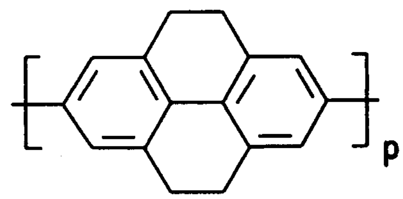
;

X, Y, B, D — sind gleich oder verschieden $CR^5$, N;

Z, W — sind gleich oder verschieden -O-, -S-, $-NR^5-$, $-CR^5R^6-$, $-CR^5=CR^6-$, $-CR^5=N-$;

p, q, r — sind gleich oder verschieden 0, 1 bis 5;

$R^1$, $R^2$, $R^3$, $R^4$, $R^5$, $R^6$, $R^7$, $R^8$ — sind gleich oder verschieden H, eine geradkettige oder verzweigte Alkyl, Alkoxy oder Estergruppe mit 1 bis 22 C-Atomen, Aryl- und/oder Aryloxygruppen, vorzugsweise Phenyl- und/oder Phenyloxygruppen, wobei der Aromat mit $C_1$-$C_{22}$-Alkyl, $C_1$-$C_{22}$-Alkoxy, Br, Cl, F, CN, und/oder $NO_2$ substituiert sein kann, Br, Cl, F, CN, $NO_2$, $CF_3$;

L, M — sind gleich oder verschieden und sind H oder, vorzugsweise, Gruppen der Formeln

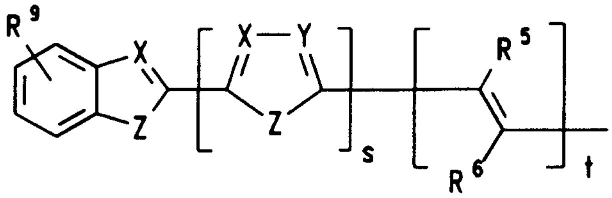

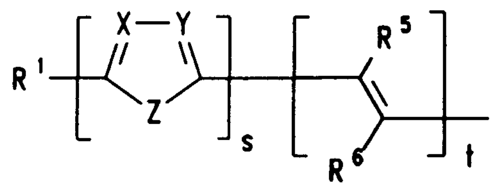

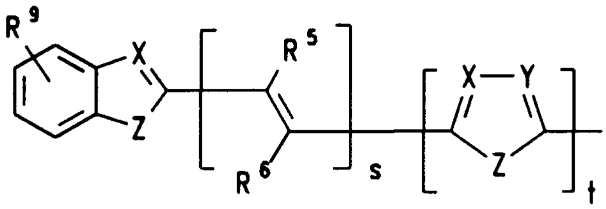

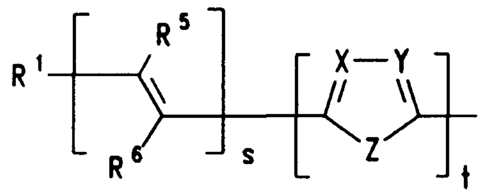

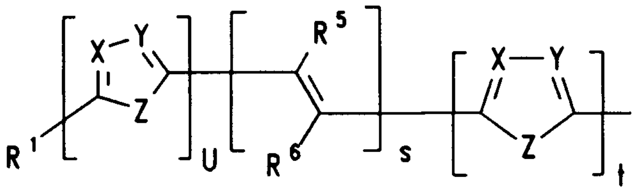

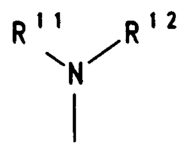

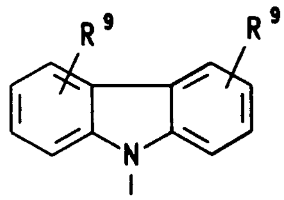

| | |
|---|---|
| $R^9$ | ist gleich oder verschieden H, eine unverzweigte oder verzweigte Alkyl- oder Alkoxygruppe mit 1 bis 22 Kohlenstoffatomen, -CN, -$NO_2$, -$NR^{11}$ $R^{12}$, Phenyl, Biphenyl, 1-Naphthyl, 2-Naphthyl, 2-Thienyl, 2-Furanyl, wobei Aryle und Heteroaryle einen weiteren Substituenten $R^9$ tragen können; |
| X, Y | sind gleich oder verschieden =$CR^5$-, =N-; |
| Z | ist gleich oder verschieden -O-, -S-, -$NR^{11}$-, $CR^5R^6$, -$CR^5$=$CR^6$-, -$CR^5$=N-; |
| $R^{11}$, $R^{12}$ | sind gleich oder verschieden H, eine unverzweigte oder verzweigte Alkylgruppe mit 1 bis 22 Kohlenstoffatomen, Phenyl, 3-Methylphenyl, Biphenyl, 1-Naphthyl, 2-Naphthyl; |
| | s, t, v sind gleich oder verschieden 0, 1 bis 5. |

Besonders bevorzugt sind Polymere, enthaltend Wiederholeinheiten der Formel (VII), bei denen gilt:

Q, K bedeuten eine Gruppe der folgenden Formeln

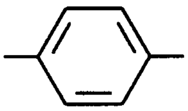
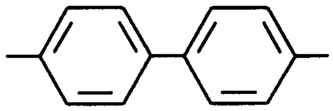
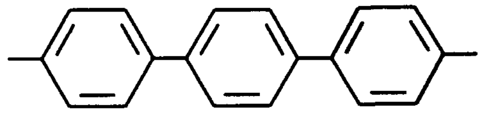

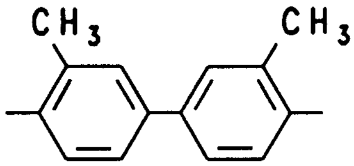
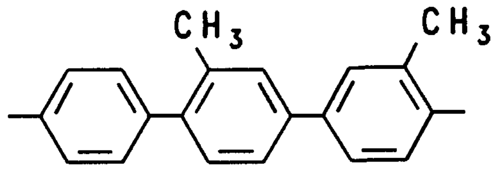
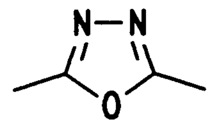

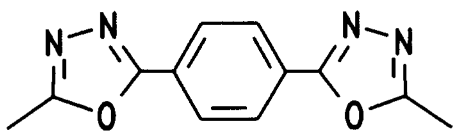
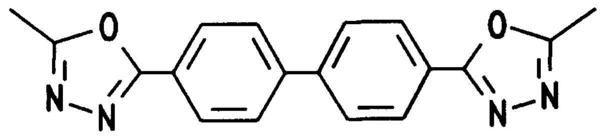

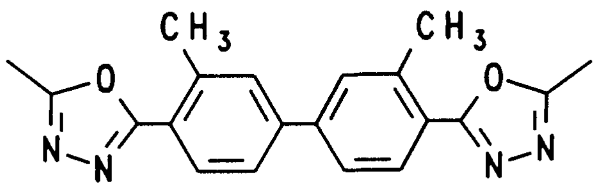
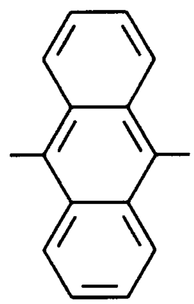

m, n sind gleich oder verschieden 0 oder 1;

L, M sind gleich oder verschieden und bedeuten H oder, vorzugsweise eine Gruppe der Formeln

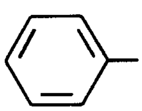
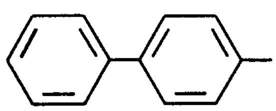
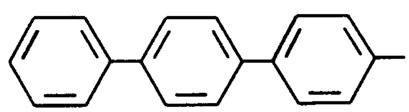
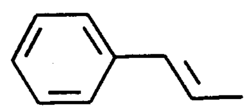

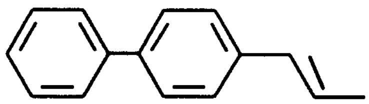 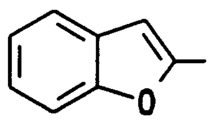 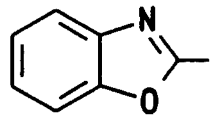 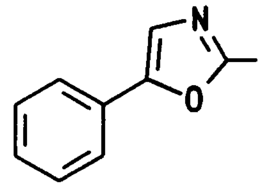

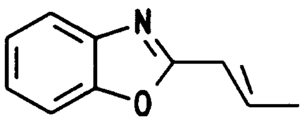 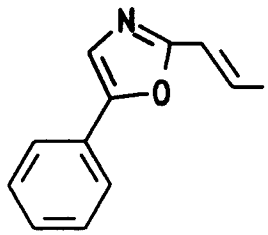 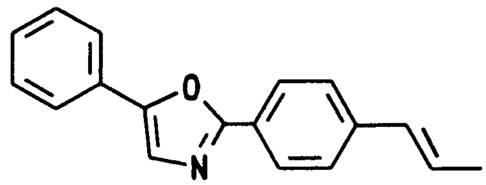

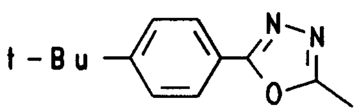 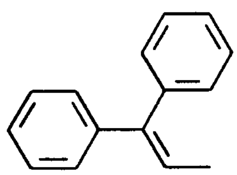 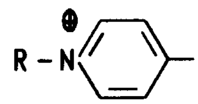 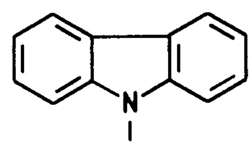

R = Alkyl, $C_2H_4SO_3^-$

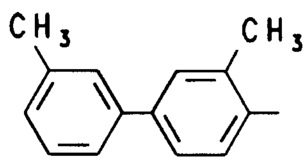 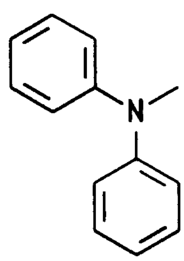 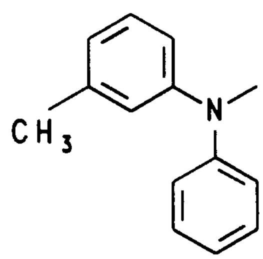 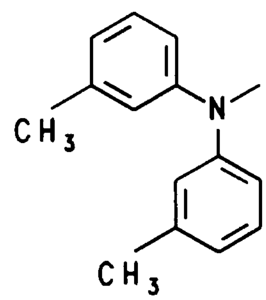

Ganz besonders bevorzugt sind folgende Verbindungen der Formel (VII), bei denen gilt

Q, K sind gleich oder verschieden und bedeuten jeweils eine Gruppe der Formeln

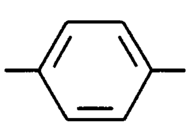 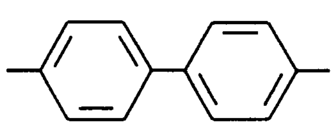 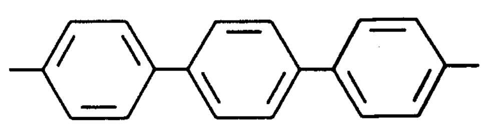

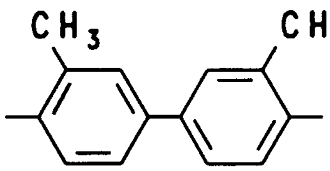
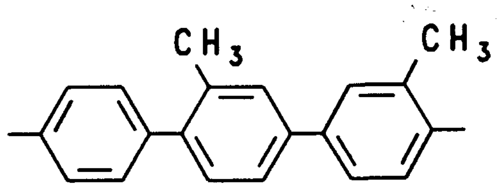
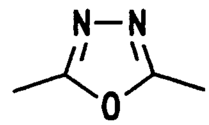
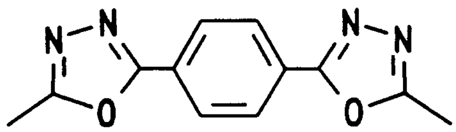
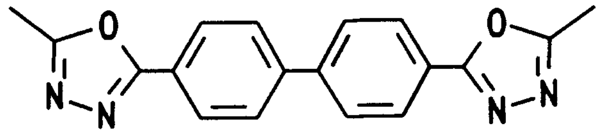
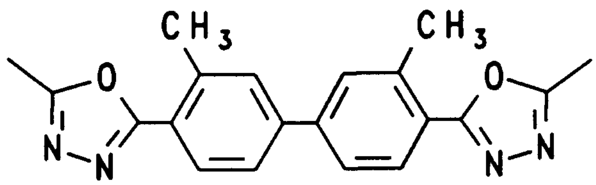
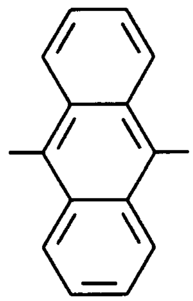

m + n ist 0 oder 1;

L, M sind gleich oder verschieden und bedeuten H oder, vorzugsweise jeweils eine Gruppe der Formeln

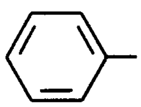
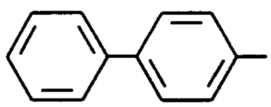
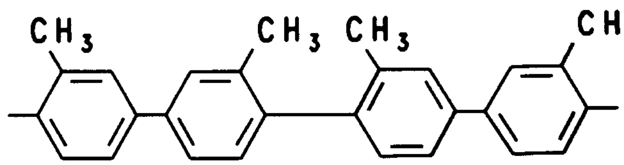
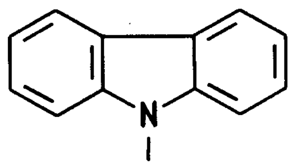
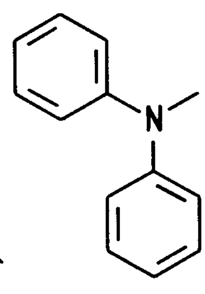
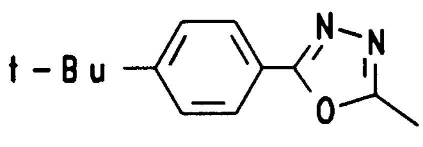
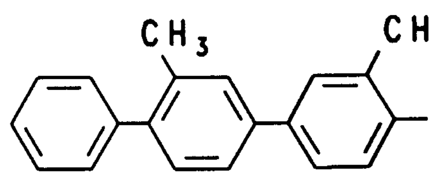

Für einige Anwendungen kann es vorteilhaft sein, eines, mehrere oder alle Wasserstoffatome, bevorzugt aromatische, durch F-Atome zu substituieren.

Die Polymere, enthaltend Wiederholeinheiten der Formeln (VI) und (VII), sind Homo- oder Copolymere, d.h., sie können auch unterschiedliche Wiederholeinheiten der angegebenen Art aufweisen. Die Herstellung dieser Art von Spiroverbindungen kann beispielsweise auf folgendem Weg erfolgen:

Als Ausgangsverbindungen für die Herstellung der Polymere kommen im allgemeinen Monomere mit einem 9,9'-Spirobifluoren-Zentrum zum Einsatz, die in 2,7- bzw. gegebenenfalls 2',7'-Position substituiert sind.

Methoden zur Synthese dieser Monomeren, beruhen z.B. auf der Synthese des 9,9'-Spirobifluorens, z.B. aus 2-Brombiphenyl und Fluorenon über eine Grignardsynthese, wie sie von R. G. Clarkson, M. Gomberg, J. Am. Chem. Soc. 1930, 52, 2881 beschrieben ist, welches anschließend weiter in geeigneter Weise substituiert wird.

Funktionalisierungen von 9,9'-Spirobifluoren sind beispielsweise beschrieben in J. H. Weisburger, E. K. Weisburger, F. E. Ray, J. Am. Chem. Soc. 1959, 72, 4253; F. K. Sutcliffe, H. M. Shahidi, D. Paterson, J. Soc. Dyers Colour 1978, 94, 306; und G. Haas, V. Prelog, Helv. Chim. Acta 1969, 52, 1202.

Wesentlich günstiger erhält man das gewünschte Substitutionsmuster des 9,9'-Spirobifluoren-Monomers, wenn die Spiroverknüpfung bereits ausgehend von geeignet substituierten Edukten erfolgt, z.B. mit 2,7-difunktionalisierten Fluorenonen, und die noch freien 2',7'-Positionen nach Aufbau des Spirozentrums dann gegebenenfalls weiter funktionalisiert werden (z.B. durch Halogenierung oder Acylierung, mit anschließender C-C-Verknüpfung nach Umwandlung der Acetylgruppen in Aldehydgruppen, oder durch Heterocyclenaufbau nach Umwandlung der Acetylgruppen in Carbonsäuregruppen)

Die weitere Funktionalisierung kann nach an sich literaturbekannten Methoden erfolgen, wie sie in Standardwerken zur Organsichen Synthese, z.B. Houben-Weyl, Methoden der Organischen Chemie, Georg-Thieme Verlag, Stuttgart und in den entsprechenden Bänden der Serie "The Chemistry of Heterocyclic Compounds" von A. Weissberger und E. C. Taylor (Herausgeber) beschrieben werden.

Für die Synthese der Gruppen A, B, C, D sei beispielsweise verwiesen auf DE-A 23 44 732, 24 50 088, 24 29 093, 25 02 904, 26 36 684, 27 01 591 und 27 52 975 für Verbindungen mit 1,4-Phenylen-Gruppen; DE-A 26 41 724 für Verbindungen mit Pyrimidin-2,5-diyl-Gruppen; DE-A 40 26 223 und EP-A 03 91 203 für Verbindungen mit Pyridin-2,5-diyl-Gruppen; DE-A 32 31 462 für Verbindungen mit Pyridazin-3,6-diyl-Gruppen; N. Miyaura, T. Yanagi und A. Suzuki, Synthetic Communications 1981, 11, 513 bis 519, DE-C 39 30 663; M. J. Sharp, W. Cheng, V. Snieckus, Tetrahedron Letters 1987, 28, 5093; G. W. Gray, J.Chem.Soc. Perkin Trans II 1989, 2041 und Mol. Cryst. Liq. Cryst. 1989, 172, 165; Mol. Cryst. Liq. Cryst. 1991, 204, 43 und 91; EP-A 0 449 015; WO 89/12039; WO 89/03821; EP-A 0 354 434 für die direkte Verknüpfung von Aromaten und Heteroaromaten.

Die Herstellung disubstituierter Pyridine, disubstituierter Pyrazine, disubstituierter Pyrimidine und disubstituierter Pyridazine findet sich beispielsweise in den entsprechenden Bänden der Serie "The Chemistry of Heterocyclic Compounds" von A. Weissberger und E. C. Taylor (Herausgeber).

Ausgehend von den oben angegebenen Monomeren ist die Polymerisation zu den erfindungsgemäßen Polymeren nach mehreren Methoden möglich.

Beispielsweise können Derivate des 9,9'-Spirobifluorens oxidativ (z.B. mit $FeCl_3$, siehe u.a. P. Kovacic, H. B. Jones, Chem. Ber. 1987, 87, 357 bis 379; M. Weda, T. Abe, H. Awano, Macromolecules 1992, 25, 5125) oder elektrochemisch (siehe z.B. N. Saito, T. Kanbara, T. Sato, T. Yamamoto, Polym. Bull. 1993, 30, 285) polymerisiert werden.

Ebenso können die erfindungsgemäßen Polymere aus 2,7-difunktionalisierten 9,9'-Spirobifluoren-Derivaten hergestellt werden.
Dihalogenaromaten lassen sich unter Kupfer/Triphenylphosphan (siehe z.B. G. W. Ebert, R. D. Rieke, J. Org. Chem. 1988, 53, 4482) oder Nickel/Triphenylphosphan-Katalyse (siehe z.B. H. Matsumoto, S. Inaba, R. D. Rieke, J. Org. Chem. 1983, 48, 840) polymerisieren.

Aromatische Diboronsäuren und aromatische Dihalogenide oder gemischte aromatische Halogen-Boronsäuren lassen sich unter Palladiumkatalyse durch Kupplungsreaktionen polymerisieren (siehe z.B. M. Miyaura, T. Yanagi, A. Suzuki, Synth. Commun. 1981, 11, 513; R. B. Miller, S. Dugar, Organometallics 1984, 3, 1261).

Aromatische Distannane lassen sich z.B., wie bei J. K. Stille, Angew. Chem. Int. Ed. Engl. 1986, 25, 508 angegeben, unter Palladiumkatalyse polymerisieren.

Weiterhin können die oben erwähnten Dibromverbindungen in die Dilithio- oder Digrignardverbindungen übergeführt werden, die dann mit weiterer Dibromverbindung mittels $CuCl_2$ (siehe z.B. G. Wittig, G. Klar, Liebigs Ann. Chem. 1967, 704, 91; H. A. Stabb, F. Bunny, Chem. Ber. 1967, 100, 293; T. Kaufmann, Angew. Chem. 1974, 86, 321 bis 354) oder durch Elektronentransfer ungesättigter 1,4-Dihalogenverbindungen (siehe z.B. S. K. Taylor, S. G. Bennett, K. J. Harz, L. K. Lashley, J. Org. Chem. 1981, 46, 2190) polymerisiert werden.

Die Synthese von Polymeren, enthaltend Wiederholeinheiten der Formel (VI), kann aber auch durch Polymerisation eines 2,7-difunktionalisierten 9,9'-Spirobifluorenderivates mit einer weiteren, geeignet difunktionalisierten Verbindung erfolgen.

So kann z.B. 2,7-Dibrom-9,9'-spirobifluoren mit 4,4'-Biphenylylbisboronsäure polymerisiert werden. Auf diese Weise ist gleichzeitig mit dem Polymerisationsschritt der Aufbau verschiedener heterocyclischer Einheiten möglich, wie z.B. die Bildung von Oxadiazoleinheiten aus difunktionellen Carbonsäurehalogeniden und difunktionellen Carbonsäurehydraziden bzw. aus der entsprechenden Dikarbonsäure und Hydrazinsulfat (B. Schulz, E. Leibnitz, Acta Polymer 1992, 43, 343; JP 05 178, 990 [93,178,990]), oder alternativ aus Dicarbonsäurehalogeniden und Bistetrazolen (C. A. Abshire, C. S. Marvel, Makromol. Chem. 1961, 44 bis 46, Seite 388).

Zur Herstellung von Copolymeren können beispielsweise unterschiedliche Monomere, enthaltend Strukturelemente der Formel (VI) bzw. (VII), gemeinsam polymerisiert werden.

Die Aufarbeitung erfolgt nach bekannten, dem Fachmann geläufigen Methoden, wie sie beispielsweise bei D. Braun, H. Cherdron, W. Kern, Praktikum der makromolekularen organischen Chemie, 3. Aufl. Hüthig Verlag, Heidelberg, 1979, S. 87 ff. beschrieben sind. Beispielsweise kann man die Reaktionsmischung filtrieren, mit wäßriger Säure verdünnen, extrahieren und das nach Trocknen und Abziehen des Lösungsmittels erhaltene Rohprodukt durch Umfällen weiter reinigen.

Endständige Bromatome können beispielsweise mit $LiAlH_4$ reduktiv entfernt werden (siehe z.B. J. March, Advanced Organic Chemistry, 3. Aufl. McGraw-Hill, S. 510).

Aufgrund den eingangs genannten Eigenschaften dieser Spiroverbindungen, wie Löslichkeit, Stabilität und amorphe Strukturen bei gleichzeitiger guter nicht-linearer optischer Aktivität und geringer optischer Verluste, eignen sich die zuvor beschriebenen Spiroverbindungen sehr gut als Werkstoffe in der nicht-linearen Optik, insbesondere zur Ausnutzung von nichtlinear-optischen Effekten dritter Ordnung.

Ein weiterer Gegenstand der Erfindung ist daher ein nichtlinear-optisches Bauelement, das eine oder mehrere der oben beschriebenen monomeren oder polymeren Spiroverbindungen enthält oder daraus besteht.

Vorzugsweise werden in diesem Bauelement nichtlinear-optische Effekte dritter Ordnung genutzt.

Ebenfalls Gegenstand der Erfindung ist ein nicht-linear-optisches Bauelement, welches einen optischen Wellenleiter enthält, der eine oder mehrere der obengenannten monomeren oder polymeren Spiroverbindungen enthält.

Das optische Bauelement ist vorzugsweise ein opto-optischer Koppler, ein Mach-Zehnder Interferometer, ein modensensitiver Koppler oder ein Prismenkoppler.

Auf den Inhalt der deutschen Patentanmeldung 195 37 969.1, deren Priorität die vorliegende Anmeldung beansprucht, sowie die Zusammenfassung der vorliegenden Anmeldung, wird hiermit ausdrücklich Bezug genommen, sie gelten durch Zitat als Bestandteil dieser Anmeldung.

Die Erfindung wird durch die folgenden Beispiele näher erläutert, ohne sie dadurch einschränken zu wollen.

Die in den Beispielen bestimmte nichtlineare Suszeptibilität 3. Ordnung wird durch die Methode der sogenannten Frequenzverdreifachung an einer Schicht bestimmt. Die Frequenzverdreifachung ist ein spezieller Fall der 4-Wellen-Mischung, in dem die Frequenz der vierten Welle die Summe der Frequenzen der ersten drei Wellen bildet, die alle dieselben Frequenz haben. Dadurch wird eine Welle mit der dreifachen Frequenz generiert, so erzeugt z.B. ein Laserstrahl bei 1064 nm eine harmonische Welle bei 355 nm. Durch die Messung der Intensität des frequenzverdreifachten Lichts kann die Suszeptibilität 3. Ordnung der Substanz bestimmt werden. Die Meßanordnung wird folgend beschrieben.

Zur Erzeugung von Lichtpulsen der fundamentalen Wellenlänge wird ein Blitzlampen-gepumpter aktiv/passiv modengekoppelter Nd-YAG-Laser benutzt, der bei einer Wellenlänge von 1064 nm und einer Pulsrate von 10 Hz betrieben wird. Für die Messungen bei 1500 nm wird ein optischer parametrischer Oszillator eingesetzt.

Der Strahl wird mit Hilfe eines Strahlteilers auf zwei fast identisch aufgebaute Meßzweige aufgeteilt. Im Probenzweig A wird der Laserstrahl mit einer langbrennweitigen Linse auf die Probe fokussiert. Diese ist auf eine schrittmotorgesteuerte Drehverstellereinheit mit senkrechter Drehachse montiert. Der Probenaufbau ist in einer evauierbaren Zelle untergebracht. Das in der Probe erzeugte harmonische Licht wird auf den Eingangsspalt eines Gittermonochromators fokussiert. Der Nachweis des wellenlängenselektierten Lichtes geschieht mit einem Photomultiplier und einem Boxcar-Verstärker (Gated Integrator).

Zur Regulierung der Strahlintensitäten dienen mehrere Filter. Die auf die Probe einfallende Energie wird mit Hilfe von Neutralfiltern definiert abgeschwächt.

Um schon vor der Probe erzeugtes harmonisches Licht zu unterdrücken, wird den Neutralfiltern ein Kantenfilter RG 850 nachgeschaltet. Hinter der Probe wird der Laserstrahl in einem Filter KG 3 absorbiert. Dadurch wird eine Beschädigung der nachfolgenden Optik durch die hohen Strahlintensitäten vermieden.

Der parallel aufgebaute Referenzzweig dient zum Ausgleich der Puls-zu-Puls-Schwankungen der Laserintensität. Dazu wird in einer geeigneten Probe harmonisches Licht erzeugt und wie oben beschrieben nachgewiesen. Dann erfolgt mittels eines analogen Funktionsgenerators eine Division des pro Laserpulses im Probenzweig erzeugten Meßsignal durch das im Referenzzweig erzeugte Signal.

Zur Bestimmung der nichtlinear optischen Suszeptibilitäten wird das harmonische Signal in Transmission als Funktion des Drehwinkels $\theta$ der Probe relativ zur Strahlachse aufgenommen.

Die optische Dämpfung (in dB/cm) beschreibt die optischen Verluste in einem Lichtwellenleiter, sie ist die Geschwindigkeit der Abnahme der Intensität des geführten Lichts innerhalb des Wellenleiters und wird von Lichtstreuung und Absorption beeinflußt.

Zur Bestimmung der optischen Dämpfung wird die Intensität des aus dem Wellenleiter gestreuten Lichts gemessen. Eine optische Faser wird in geringem Abstand zu dem Wellenleiter montiert und entlang des geführten Lichts gefahren. Ein Teil des geführten Lichts koppelt in die Faser und wird mit einer Photodiode als Funktion des Ortes gemessen. Unter der Annahme einer gleichmäßigen Verteilung der Streuzentren ist die gestreute Intensität (I) proportional der Intensität des geführten Strahls und nimmt nach dem Beerschen-Gesetz exponentiel ab. Die Auftragung von (I) gegen die Position der optischen Faser ergibt eine Gerade, aus deren Steigung der Dämpfungskoeffizient $\alpha$ bestimmt wird.

Beispiel 1

Synthese von 2,2',4,4',7,7'-Hexabromo-9,9'-spirobifluoren

Zu einer Lösung von 3,16g (10 mmol) 9,9'-Spirobifluoren in 20 ml Methylenchlorid wurde 200 mg wasserfreies $FeCl_3$ gegeben und mit Ultraschall behandelt. Der Reaktionskolben wurde mit Al-Folie vor Lichtzutritt geschützt. Anschließend wurden in der Siedehitze 9,85 g (3,15 ml, 62 mmol) Brom in 5 ml Methylenchlorid innerhalb von 15 Minuten zugetropft. Die Lösung wurde weitere 20 Stunden am Rückfluß gekocht und mit Ultraschall behandelt. Nach Abkühlung wurde mit Petrolether versetzt und abgesaugt. Zur weiteren Reinigung wurde aus THF/Methanol umkristallisiert und 5 Stunden bei 80°C getrocknet. Ausbeute 6,15 g (77 %) farblose Kristalle.

Beispiel 2

Synthese von 2,2',4,4',7,7'-Hexabiphenylyl-9,9'-spirobifluoren

In einem 250 ml Zweihalskolben mit Rückflußkühler, KPG-Rührer wurden 1,6 g Hexabromspirobifluoren und 3 g Biphenylboronsäure in einer Mischung aus 50 ml Toluol und 50 ml 1 M Kaliumcarbonatlösung aufgeschlämmt. Die Mischung wurde unter Stickstoff am Rückfluß gekocht und 115 mg Tetrakis(triphenylphosphin)palladium in 5 ml Toluol zugegeben. Anschließend wurde unter Rühren 7 Stunden am Rückfluß gekocht. Nach Beendigung der Reaktion wurde die abgekühlte Lösung abfiltriert und das Filtrat 2 x mit Wasser ausgeschüttelt (zur besseren Phasentrennung wurde Chloroform zugesetzt). Die organische Phase wurde über Natriumsulfat getrocknet, über eine kurze Säule mit Kieselgel filtriert und anschließend das Lösungsmittel am Rotationsdampfer abgezogen. Zur weiteren Reinigung wurde aus Dichlormethan/Pentan umkristallisiert. Man erhielt 2 g (80 %) farblose, unter UV-Beleuchtung blau fluoreszierende Kristalle.

$^{13}C$-NMR [360 MHz.; ATP, breitbandentkoppelt] ($CDCl_3$, ppm]: 65,94 (1C, Spiro-C); 126,95 (6C, CH), 126,97 (6C, CH), 127,17 (6C, CH), 127,35 (6C, CH), 127,36 (6C, CH), 127,39 (6C, CH), 127,52 (6C, CH), 128,73 (6C, CH), 128,75 (6C, CH), 128,94 (6C, CH), 129,90 (4C, CH), 137,77 (2C), 137,86 (2C), 139,43 (2C), 139,69 (2C), 139,89 (2C), 140,09 (2C), 140,17 (2C), 140,22 (2C), 140,30 (2C), 140,63 (2C), 140,64 (2C), 140,68 (2C), 140,72 (2C), 140,74 (2C), 150,45 (2C), 150,92 (2C).

Beispiel 3

Die in Beispiel 2 beschriebene Verbindung (Spiro 1) wird in Chlorbenzol gelöst (Konzentration 50 mg/ml). Die Lösung wird auf Quarzglasträger der Größe 25x37,5x1 mm bei 2000 Umdrehungen pro Minute aufgeschleudert. Die Schichtdicke beträgt dabei ca. 50 nm.

Der beschichtete Träger wird in einer Apparatur zur Bestimmung der nichtlinear optischen Suszeptibilität 3. Ordnung durch Frequenzverdreifachung montiert. Bei einer Anregungswellenlänge von 1064 nm wird eine nichtlineare optische Suszeptibilität von ca. $10^{-10}$ esu gemessen. Bei einer Anregungswellenlänge von 1500 nm wird ein Wert von ca. $10^{-11}$ esu gemessen.

Beispiel 4

Die in Beispiel 2 beschriebene Verbindung (Spiro 1) wird durch thermisches Aufdampfen im Vakuum auf einen Quarzglasträger der Größe 25x37,5x1 mm aufgetragen. Die Schichtdicke beträgt dabei ca. 400 nm.

Die Probe wird in einem Meßaufbau für Wellenleitermodenspektroskopie mit einer Lichtquelle von 633 nm montiert und die Dämpfung gemessen. Für die TE0 Mode wird eine Dämpfung von 2 dB/cm gemessen.

Beispiel 5 Synthese von 2,7-Dibrom-9,9'-spirobifluoren

Ein Grignardreagenz bereitet aus 0,72 g (30 mmol) Magnesiumspänen und 5,1 ml (30 mmol) 2-Brombiphenyl in 15 ml Diethylether wurde im Verlauf von 2 Stunden unter Rühren (im Ultraschallbad) zu einer siedenden Suspension von 10,0 g (29,6 mmol) 2,7-Dibrom-9-fluorenon in 100 ml trockenem Diethylether getropft. Nach beendeter Zugabe wurde 3 Stunden weiter gekocht. Nach Abkühlung über Nacht wurde der ausgefallene Niederschlag abgesaugt und mit kaltem Ether gewaschen. Der abgesaugte Magnesiumkomplex wurde in einer Lösung von 15 g Ammoniumchlorid in 250 ml Eiswasser hydrolysiert. Nach 1 Stunde wurde das gebildete 9-(2-Biphenylyl)-2,7-dibrom-9-fluorenol abgesaugt, mit Wasser gewaschen und trockengesaugt. Das getrocknete Fluorenol wurde für die Ringschlußreaktion in 100 ml Eisessig, nach Zugabe von 3 Tropfen konzentrierter Salzsäure 6 Stunden gekocht. Man ließ über Nacht kristallisieren, saugte das gebildete Produkt ab und wusch mit Eisessig und Wasser.

Ausbeute: 11 g (77 %) 2,7-Dibrom-9,9'-spirobifluoren. Zur weiteren Reinigung kann aus THF umkristallisiert werden.

$^{1}H$-NMR ($CDCl_3$, ppm): 6,73 (d, J = 7,63 Hz, 2 H, H-1',8'); 6,84 (d, J = 1,83 Hz, 2 H, H-1,8); 7,15 (td, J = 7,63, 1,22 Hz.,

2 H, H-2',7'); 7,41 (td, J = 7,63, 1,22 Hz, 2 H, H-3',6'); 7,48 (dd, J = 8,24, 1,83 Hz, 2 H, H-3,6); 7,67 (d, J = 8,24; 2 H; H-4,5); 7,85 (d, J = 7,63, 2 H, H-4',5').

Beispiel 6 Synthese von 2,7-Dicarbethoxy-9,9'-spirobifluoren

Ein Grignardreagenz bereitet aus 0,97 g (40 mmol) Magnesiumspänen und 9,32 g (6,8 ml, 40 mmol) 2-Brombiphenyl in 50 ml trockenem Diethylether wurde im Verlauf von 2 Stunden zu einer siedenden Lösung von 13 g (40 mmol) 2,7-Dicarbethoxy-9-fluorenon in 100 ml trockenem Diethylether getropft. Nach beendeter Zugabe wurde 3 Stunden weiter gekocht. Nach Abkühlung über Nacht wurde der ausgefallene Niederschlag abgesaugt und mit kaltem Ether gewaschen. Der abgesaugte Magnesiumkomplex wurde in einer Lösung von 15 g Ammoniumchlorid in 250 ml Eiswasser hydrolysiert. Nach 1 Stunde wurde das gebildete 9-(2-Biphenylyl)-2,7-dicarbethoxy-9-fluorenol abgesaugt, mit Wasser gewaschen und trockengesaugt. Das getrocknete Fluorenol wurde für die Ringschlußreaktion in 100 ml Eisessig, nach Zugabe von 3 Tropfen konzentrierter Salzsäure 6 Stunden gekocht. Man ließ über Nacht kristallisieren, saugte das gebildete Produkt ab und wusch mit Eisessig und Wasser.
Ausbeute: 15,1 g (82 %) 2,7-Dicarbethoxy-9,9'-spirobifluoren. Zur weiteren Reinigung kann aus Ethanol umkristallisiert werden.
$^{1}$H-NMR ($CDCl_3$, ppm): 1,30 (t, J = 7,12 Hz, 6 H, Ester-$CH_3$); 4,27 (q, J = 7,12 Hz, 4 H, Ester-$CH_2$); 6,68 (d, J = 7,63 Hz, 2 H, H-1', 8'); 7,11 (td, J = 7,48, 1,22 Hz, 2H, H-2', 7'); 7,40 (td, J = 7,48, 1,22 Hz, 4 H, H-1, 8, 3', 6'); 7,89 (dt, J = 7,63, 0,92 Hz, 2 H, H-4', 5'); 7,94 (dd, J = 7,93, 0,6 Hz, 2 H, H-4, 5); 8,12 (dd, J = 7,93, 1,53 Hz, 2 H, H-3, 6).

Beispiel 7 Polymerisation von 2,7-Dibrom-9,9'-spirobifluoren mit Ni(0) nach Yamamoto zu Poly-2,7-(9,9'-spirobifluoren)ylen (Polymer 1)

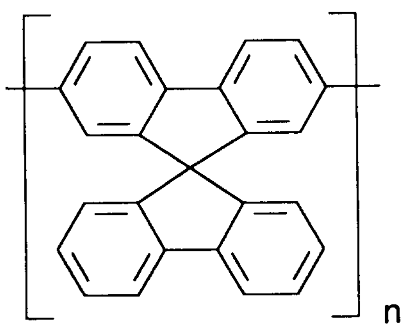

Unter Argon wurde eine Lösung von 1,517 g 2,7-Dibrom-9,9'-spirobifluoren in 30 ml trockenem THF bereitet und auf 60°C erwärmt. Die warme Lösung wurde rasch, unter Schutzgas, zu einer ebenfalls unter Schutzgas am Rückfluß kochenden Mischung aus 825 mg $Ni(cod)_2$, 470 mg 2,2'-Bipyridyl und 0,4 ml 1 ,5-Cyclooctadien (COD) in 20 ml trockenem THF gegeben. Die Polymerisation begann sofort, wobei sich die tiefblaue Reaktionsmischung rot färbte. Man ließ 6 Stunden am Rückfluß weiterkochen und kühlte anschließend auf Raumtemperatur ab. Das rotgefärbte Polymer wurde abgesaugt und mit THF, sowie verdünnter Salzsäure und Wasser gewaschen.
Durch Extraktion mit 200 ml Chloroform wurde eine erste lösliche Polymerfraktion gewonnen (weitere lösliche Fraktionen waren durch Extraktion z.B. mit 1,2-Dichlorethan und 1-Chlornaphthalin gewinnbar), die durch Ausschütteln mit Ethylendiamintetraessigsäure (3x mit Ammoniak auf pH 7 bis 8 eingestellte wäßrige Lösung, 1x pH 3) und nachfolgendem Ausschütteln mit verdünnter Salzsäure und Wasser gereinigt wurde. Die getrocknete Chloroformlösung wurde auf 10 ml eingeengt und das Polymer durch Eintropfen in 70 ml Methanol ausgefällt. Das erhaltene Polymer war gelblich gefärbt.
$^{1}$H-NMR ($CDCl_3$, ppm): 6,63 - 6,68 (2H, H-1,8); 6,71- 6,75 (2H, H-1',8'); 7,00 - 7,10 (2H, H-2',7'); 7,21 - 7,38 (4H, H-3,3',6,6'); 7,59-7,70 (2H, H-4',5'); 7,75-7,82 (2H, H-4,5).

Beispiel 8

Die in Beispiel 7 beschriebene polymere Verbindung (Spiro 2) wird in Chlorbenzol gelöst (Konzentration 30 mg/ml). Die Schichten werden auf Quarzglasträger der Größe 25x37.5x1 mm bei 3000 Umdrehungen pro Minute aufgeschleudert. Die Schichtdicke beträgt dabei ca. 50 nm.
Der beschichtete Träger wird in einer Apparatur zur Bestimmung der nichtlinear optischen Suszeptibilität 3. Ordnung

durch Frequenzverdreifachung montiert. Bei einer Anregungswellenlänge von 1064 nm wird eine nichtlineare optische Suszeptibilität von ca. $10^{-10}$ esu gemessen. Bei einer Anregungswellenlänge von 1500 nm wird ein Wert von ca. $10^{-11}$ esu gemessen.

Beispiel 9

Die in Beispiel 7 beschriebene polymere Verbindung (Spiro 2) wird in Chlorbenzol gelöst (Konzentration 100 mg/ml). Die Schichten werden auf Quarzglasträger der Größe 25x37.5x1 mm bei 700 Umdrehungen pro Minute aufgeschleudert. Die Schichtdicke beträgt dabei ca. 400 nm.
Die Probe wird in einem Meßaufbau für Wellenleitermodenspektroskopie mit einer Lichtquelle von 633 nm montiert und die Dämpfung gemessen. Für die TE0 Mode wird eine Dämpfung von weniger als 2 dB/cm gemessen.

**Patentansprüche**

**1.** Verwendung von Spiroverbindungen der allgemein Formel I

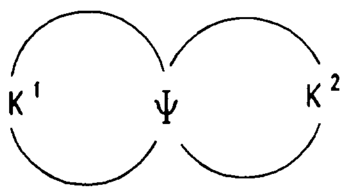

(I),

wobei Ψ C, Si, Ge oder Sn, vorzugsweise C, Si oder Ge, besonders bevorzugt C oder Si und insbesondere C und $K^1$ und $K^2$ unabhängig voneinander konjugierte Systeme bedeuten,
oder von konjugierten Polymeren, enthaltend Wiederholeinheiten der Formel (VI),

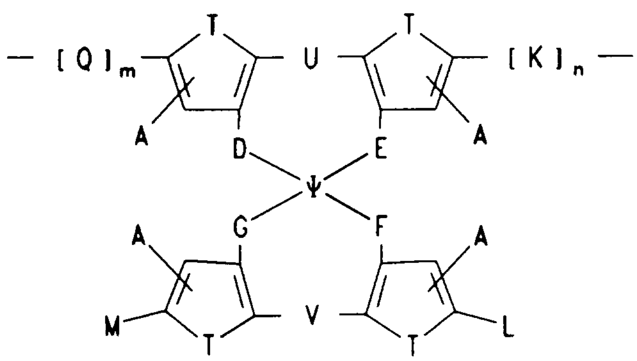

(VI)

wobei die Symbole und Indizes folgende Bedeutungen haben:

| | |
|---|---|
| Ψ | ist Sn, Ge, Si, C |
| D, E, F, G | sind gleich oder verschieden, und bedeuten $-CR^1R^2-$, -O-, -S-, $-NR^3-$ oder eine chemische Bindung; wobei $R^1$, $R^2$, $R^3$ $C_1$-$C_{20}$-Alkyl oder H bedeuten, und wobei $R^1$ und $R^2$ gemeinsam einen gegebenenfalls substituierten Cycloalkyl-Ring bilden können; |
| U | ist $-CR^4{=}CR^5-$ oder eine chemische Bindung; |
| V | hat die Bedeutung von U oder ist $-CR^1R^2-$, -O-, -S-, $-NR^3-$, $-SiR^1R^2-$, $-SO_2-$,-SO-, -CO-, wobei $R^1$, $R^2$, $R^3$ die oben angegebene Bedeutung haben und $R^4$ $R^5$ die Bedeutung von $R^1$, $R^2$, $R^3$ haben oder Fluor oder $CF_3$ sind; |
| A | ist Wasserstoff oder ein $C_1$-$C_{20}$-Kohlenwasserstoffrest, der auch Heteroatome enthalten kann, |
| $R^6$ und $R^7$ | sind Wasserstoff, ein $C_1$-$C_{20}$-Kohlenwasserstoffrest der aliphatisch, aromatisch, linear, verzweigt oder alicyclisch sein kann, wobei $R^6$ mit $R^7$ gemeinsam einen Ring bilden können; |

| | |
|---|---|
| T | ist -O-, -S-, -$NR^3$-, -$CR^1R^2$-, CH=N-, -CA=CA-, -CH=CA-, -CH=CF- oder -CF=CF-, wobei $R^1$, $R^2$, $R^3$ und A die oben angegebene Bedeutung haben, |
| K, L, M, Q | sind gleich oder verschieden konjugierte Elektronensysteme enthaltende Kohlenwasserstoffreste, die auch Heteroatome enthalten können, wobei K, L, M, Q auch mit den jeweils ortho-stehenden Gruppen A zu einem Ring zusammengeschlossen sein können, der gesättigt, partiell ungesättigt oder maximal ungesättigt ist, wobei in solchen Fällen bevorzugt ein anelliertes aromatisches Ringsystem vorliegt, |
| L, M | können auch H, ein nichtkonjugierter Kohlenwasserstoff mit vorzugsweise 1-20 C-Atomen, der auch Heteroatome enthalten kann, Halogen, CN, $NO_2$, eine Amino, Alkylamino oder Dialkylaminogruppe sein; |
| m,n | sind 0, 1, 2 oder 3. |

**2.** Verwendung nach Anspruch 1, dadurch gekennzeichnet, daß ein 9,9'-Spirobifluorenderivate der Formel (II) eingesetzt wird,

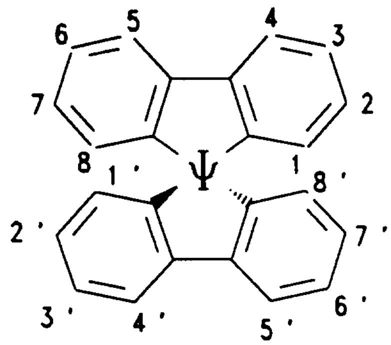

(II) ,

wobei Ψ die in Anspruch angegebenen Bedeutungen hat und wobei die Benzogruppen unabhängig voneinander substituiert und/oder anelliert sein können.

**3.** Verwendung nach Anspruch 2, dadurch gekennzeichnet, daß ein Spirobifluorenderivate der Formel (III) eingesetzt wird,

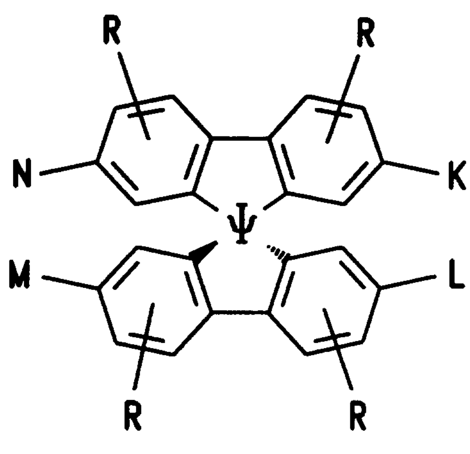

(III) ,

wobei die Symbole und Indizes folgende Bedeutungen haben:

| | |
|---|---|
| Ψ | ist C, Si, Ge oder Sn; |
| K, L, M, N | sind gleich oder verschieden und bedeuten eine Gruppe der Formeln |

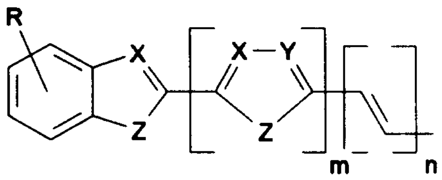

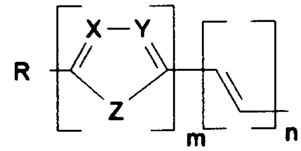

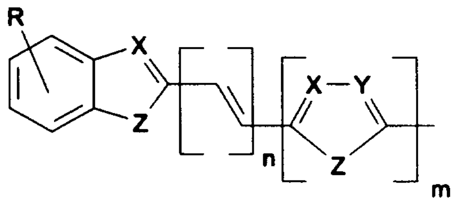

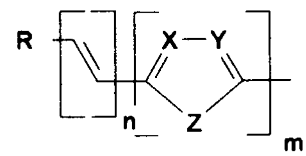

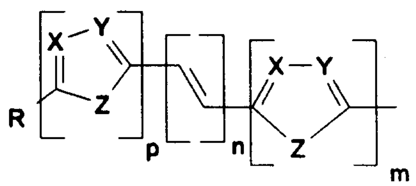

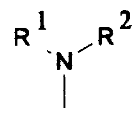

| | |
|---|---|
| R | hat,gleich oder verschieden, die gleichen Bedeutungen wie K, L, M, N haben oder ist Wasserstoff, eine lineare oder verzweigte Alkyl-, Alkoxy-, Sulfid-, Sulfon- oder Carboalkoxygruppe mit 1 bis 22 C-Atomen, -CN, $-NO_2$, $-NR^1R^2$, -Ar oder -O-Ar; |
| Ar | ist Phenyl, Biphenyl, 1-Naphthyl, 2-Naphthyl, 2-Thienyl, 2-Furanyl, wobei jede dieser Gruppen einen oder zwei Reste R tragen kann, |
| m, n, p | sind 0, 1, 2 oder 3; |
| X, Y | sind =CR- oder =N-; |
| Z | ist -O-, -S-, -NR-, -CRR-, -CH=CH-, -CH=N-; |
| $R^1$ und $R^2$ | sind Wasserstoff, eine lineare oder verzweigte Alkylgruppe mit 1 bis 22 C-Atomen, -Ar oder 3-Methylphenyl. |

**4.** Verwendung nach Anspruch 3, dadurch gekennzeichnet, daß eine Verbindung der Formel (IIIa) - (IIIg) eingesetzt wird,

IIIa) K = L = M = N und ist eine Gruppe der Formeln:

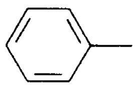
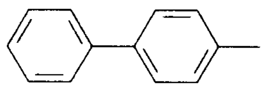
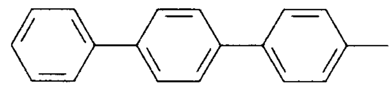
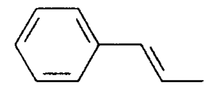
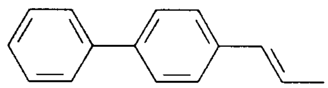
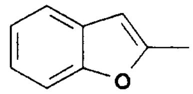
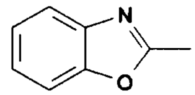
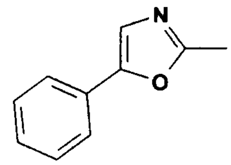
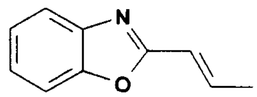
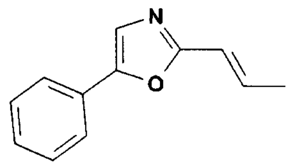
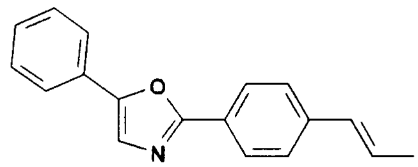
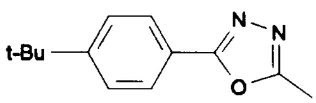
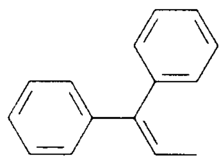
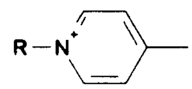

R = $C_1$-$C_{22}$-Alkyl, $C_2H_4SO_3^-$

IIIb) K = M = H und N = L und ist eine Gruppe der Formeln:

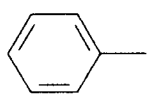
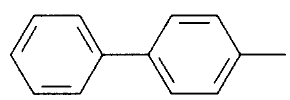
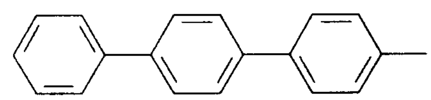
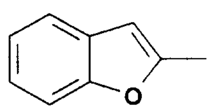
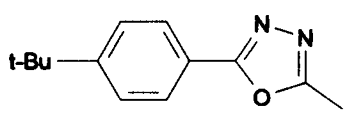
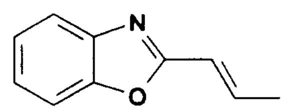
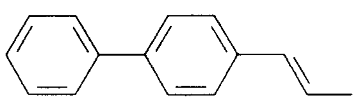
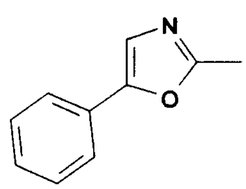
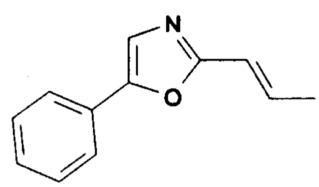
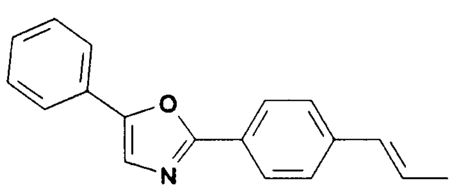
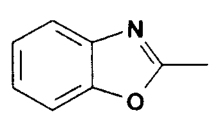
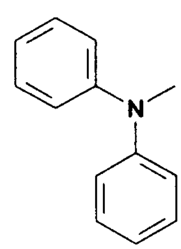

IIIc) K = M und ist eine Gruppe der Formeln:

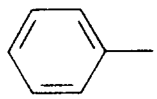

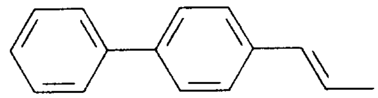

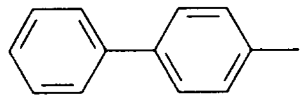

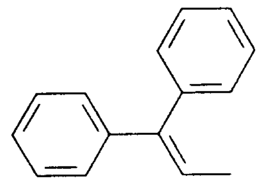

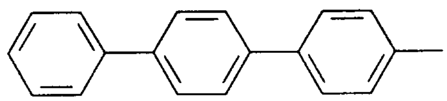

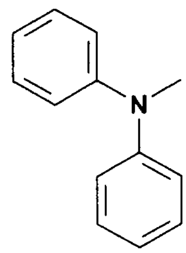

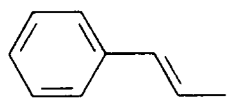

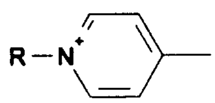

R = $C_1$-$C_2$-Alkyl, $C_2H_4SO_3^-$
und N = L und ist eine Gruppe der Formeln:

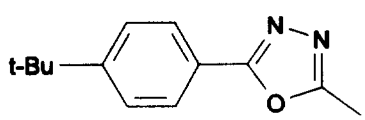

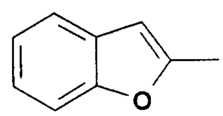

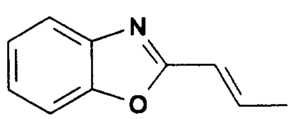

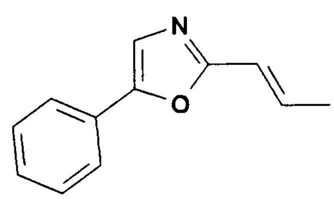

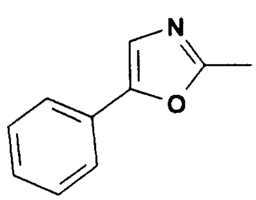

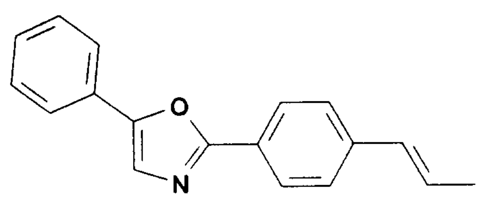

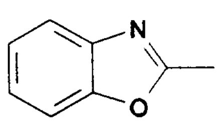

IIId) K = M und ist eine Gruppe der Formeln:

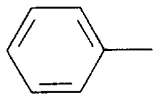
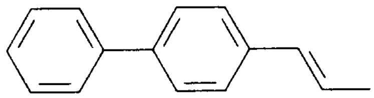
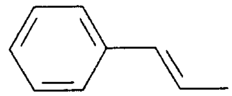
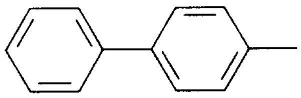
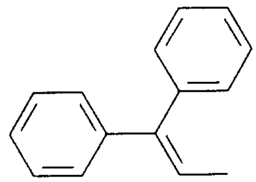
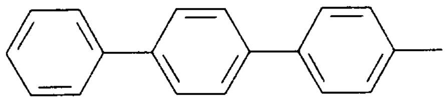

und N = L und ist eine Gruppe der Formeln:

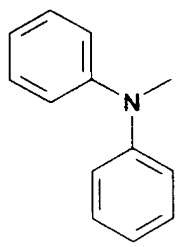
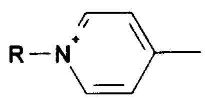

R = $C_1$-$C_{22}$-Alkyl, $C_2H_4SO_3^-$

IIIe) K = L = H und M = N und ist eine Gruppe der Formeln:

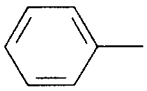
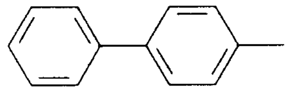
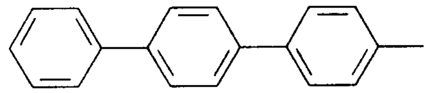

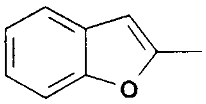
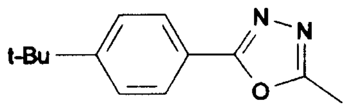
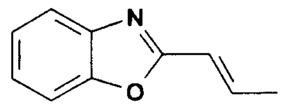

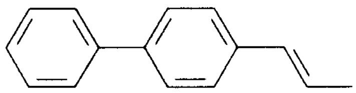
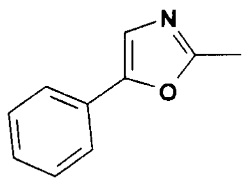
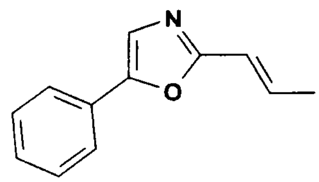

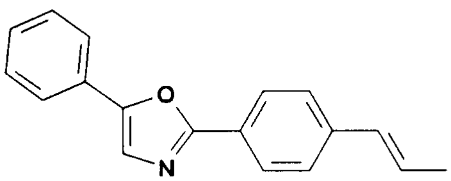
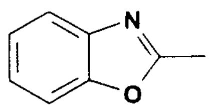
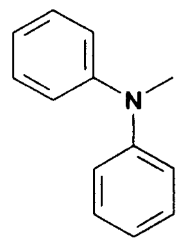

IIIf) K = L und ist eine Gruppe der Formeln:

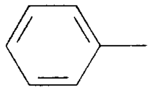

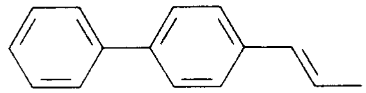

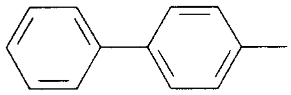

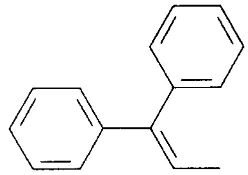

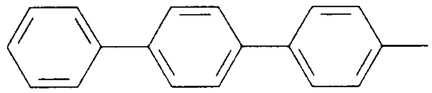

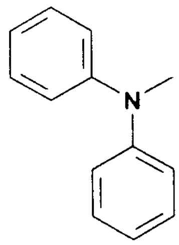

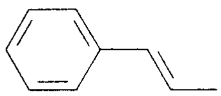

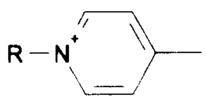

R = $C_1$-$C_{22}$-Alkyl, $C_2H_4SO_3^-$
und M = N und ist eine Gruppe der Formeln:

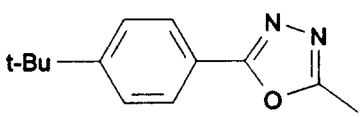

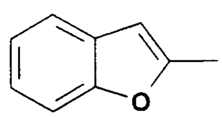

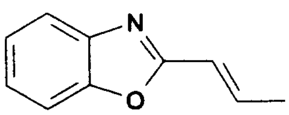

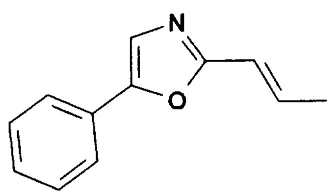

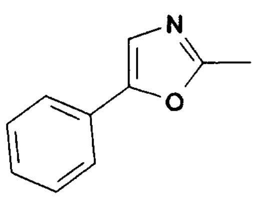

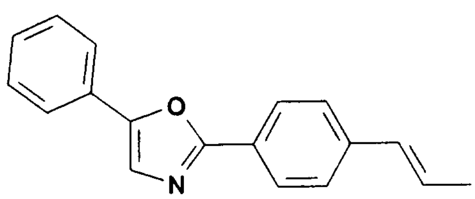

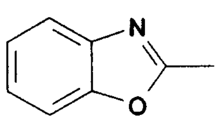

IIIg) K = L und ist eine Gruppe der Formeln:

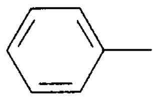
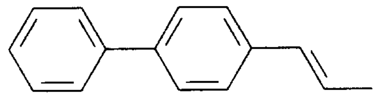
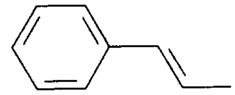

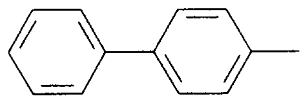
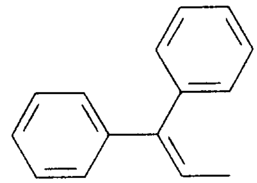

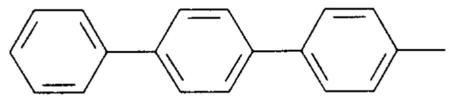

und M =N und ist eine Gruppe der Formeln:

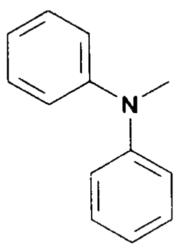
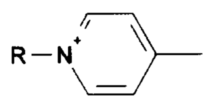

R = $C_1$-$C_{22}$-Alkyl, $C_2H_4SO_3^-$

wobei die übrigen Symbole und Indizes die in der Formel (III) angegebenen Bedeutungen haben.

**5.** Verwendung nach Anspruch 1, dadurch gekennzeichnet, daß ein konjugiertes Polymer, enthaltend Wiederholeinheiten der Formel (VII), eingesetzt wird,

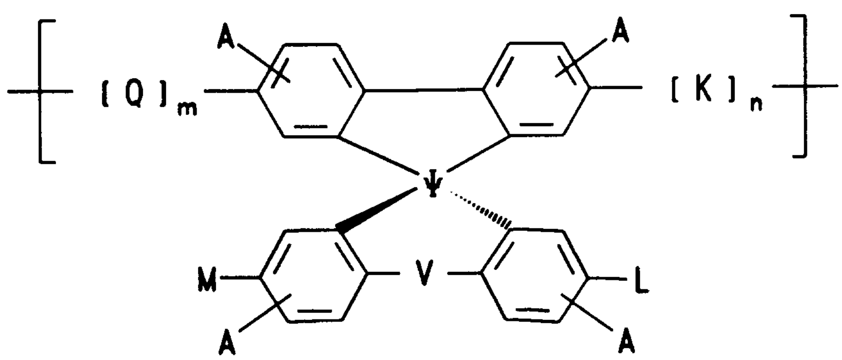

(VII)

wobei die Symbole und Indizes folgende Bedeutung haben:

| | |
|---|---|
| Ψ | ist Sn, Ge, Si oder C; |
| Q, K, L, M | sind gleich oder verschieden H oder jeweils eine bis fünfzehn gleiche oder verschiedene Arylen- und/oder Heteroarylen- und/oder Vinylengruppen, die gegebenenfalls substituiert sein können, |
| L,M | können auch H, ein nichtkonjugierter Kohlenwasserstoff mit vorzugsweise 1 - 20 C-Atomen, der auch Heteroatome enthalten kann, Halogen, CH, $NO_2$, eine Amino, Alkylamino oder Dialkylamino- |

| | |
|---|---|
| | gruppe sein. |
| A | ist wie in Anspruch 1 definiert; |
| m, n | sind 0 oder 1. |

6. Verwendung nach Anspruch 5, dadurch gekennzeichnet, daß die Symbole und Indizes in der Formel (VII) folgende Bedeutungen haben:

| | |
|---|---|
| A | ist gleich oder verschieden $R^1$, $R^2$, $R^3$ und/oder $R^4$; |
| Q, K | sind gleich oder verschieden konjugierte $C_2$ bis $C_{100}$ Kohlenwasserstoffreste, insbesondere Gruppen der Formeln |

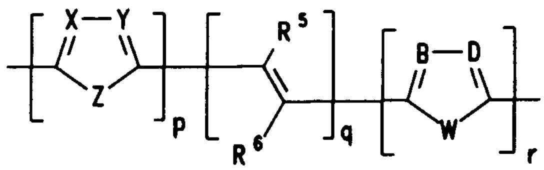
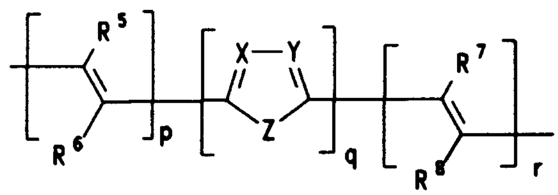

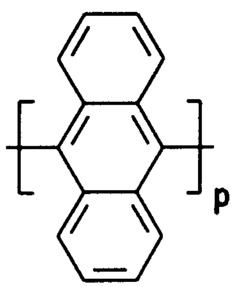
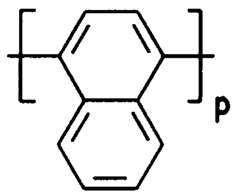
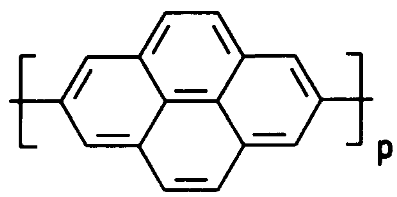
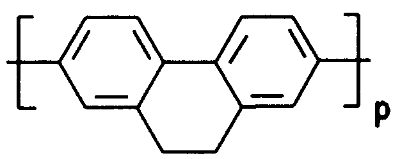
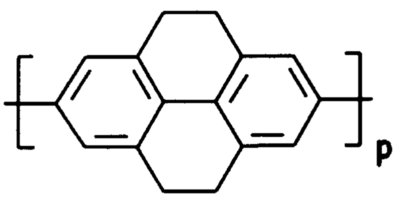
;

| | |
|---|---|
| X, Y, B, D | sind gleich oder verschieden $CR^5$, N; |
| Z, W | sind gleich oder verschieden -O-, -S-, $-NR^5-$, $-CR^5R^6-$, $-CR^5=CR^6-$, $-CR^5=N-$; |
| p, q, r | sind gleich oder verschieden 0, 1 bis 5; |
| $R^1$, $R^2$, $R^3$, $R^4$, $R^5$, $R^6$, $R^7$, $R^8$ | sind gleich oder verschieden H, eine geradkettige oder verzweigte Alkyl, Alkoxy oder Estergruppe mit 1 bis 22 C-Atomen, Aryl- und/oder Aryloxygruppen, wobei der Aromat mit $C_1$-$C_{22}$-Alkyl, $C_1$-$C_{22}$-Alkoxy, Br, Cl, F, CN, und/oder $NO_2$ substituiert sein kann, Br, Cl, F, CN, $NO_2$, $CF_3$; |
| L, M | sind gleich oder verschieden H oder Gruppen der Formeln |

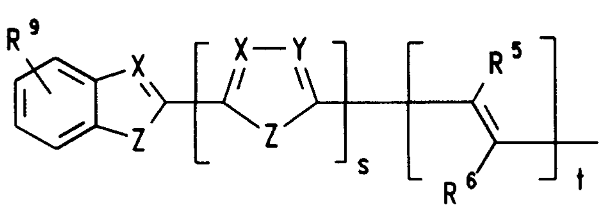
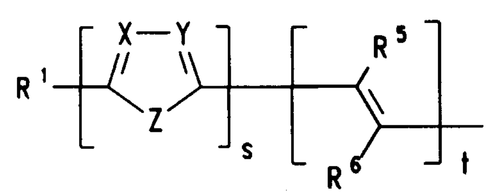

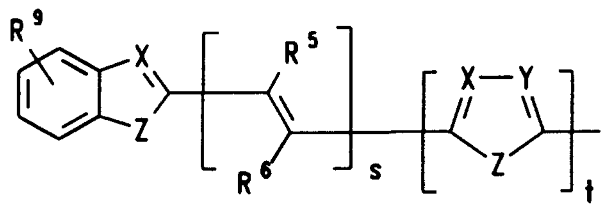

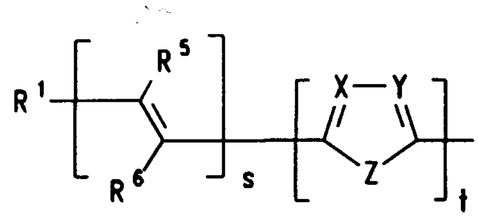

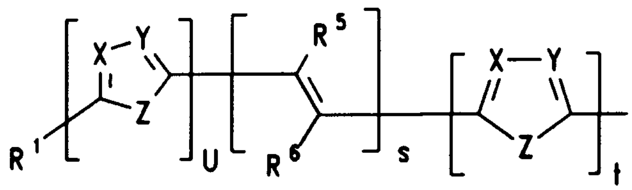

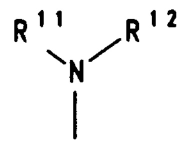

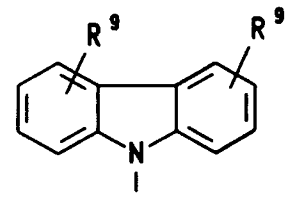

| | |
|---|---|
| $R^9$ | ist gleich oder verschieden H, eine unverzweigte oder verzweigte Alkyl- oder Alkoxygruppe mit 1 bis 22 Kohlenstoffatomen, -CN, $-NO_2$, $-NR^{11}R^{12}$, Phenyl, Biphenyl, 1-Naphthyl, 2-Naphthyl, 2-Thienyl, 2-Furanyl, wobei Aryle und Heteroaryle einen weiteren Substituenten $R^9$ tragen können; |
| X, Y | sind gleich oder verschieden $=CR^5-$, =N-; |
| Z | ist gleich oder verschieden -O-, -S-, $-NR^{11}-$, $CR^5R^6$, $-CR^5=CR^6-$, $-CR^5=N-$; |
| $R^{11}$, $R^{12}$ | sind gleich oder verschieden H, eine unverzweigte oder verzweigte Alkylgruppe mit 1 bis 22 Kohlenstoffatomen, Phenyl, 3-Methylphenyl, Biphenyl, 1-Naphthyl, 2-Naphthyl. |

**7.** Verwendung nach Anspruch 5 oder 6, dadurch gekennzeichnet, daß die Symbole Q, K, L, M, m und n in der Formel (VII) folgende Bedeutungen haben:

Q, K sind gleich oder verschieden

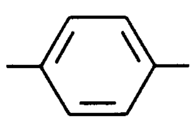

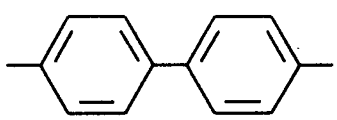

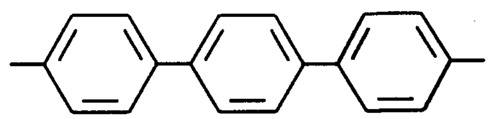

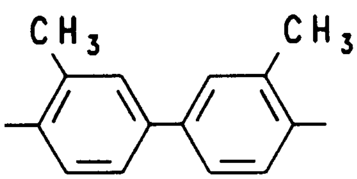

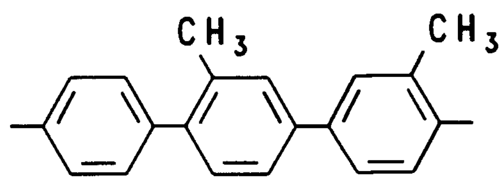

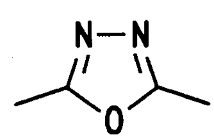

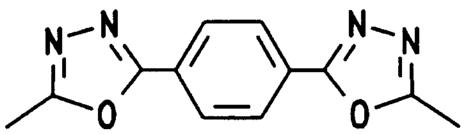 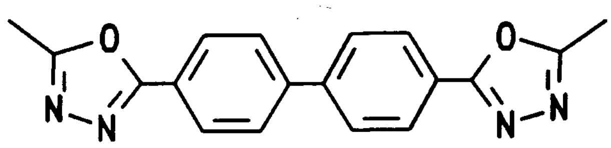

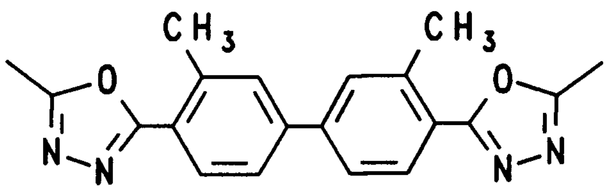 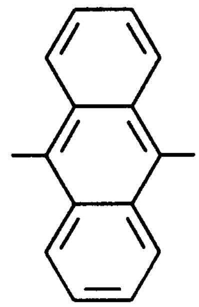

m, n sind gleich oder verschieden 0 oder 1;
L, M sind gleich oder verschieden H oder eine Gruppe der Formeln

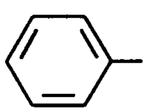 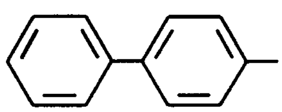 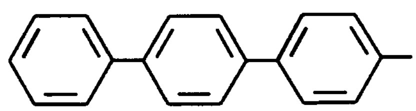 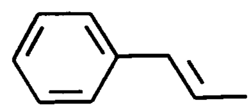

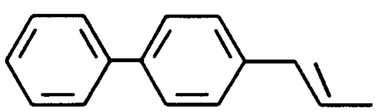 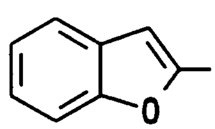 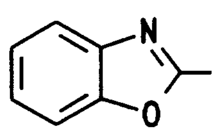 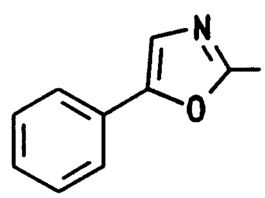

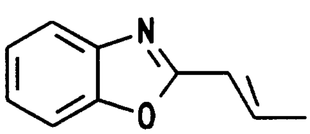 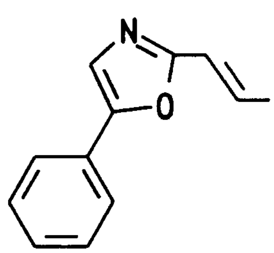 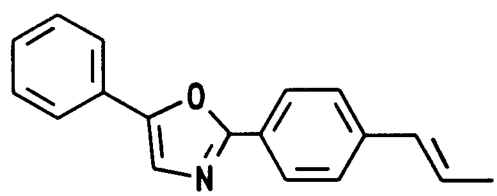

**8.** Nicht-linear optisches Bauelement, dadurch gekennzeichnet, daß es eine oder mehrere Spiroverbindungen nach einem oder mehreren der Ansprüche 1 bis 7 enthält oder daraus besteht.

**9.** Nicht-linear optisches Bauelement, dadurch gekennzeichnet, daß es einen optischen Wellenleiter, enthaltend eine oder mehrere Spiroverbindungen nach einem oder mehreren der Anspüche 1 bis 7, enthält.

**10.** Nicht-linear optisches Bauelement nach Anspruch 9, aus der Gruppe opto-optische Koppler, Mach-Zehnder-Interferometer, modenselektive Koppler und Prismenkoppler.

Europäisches Patentamt

**EUROPÄISCHER TEILRECHERCHENBERICHT**

der nach Regel 45 des Europäischen Patentübereinkommens für das weitere Verfahren als europäischer Recherchenbericht gilt

Nummer der Anmeldung
EP 96 11 6058

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.6) |
|---|---|---|---|
| X<br>Y | WO-A-94 12910 (ALLIED-SIGNAL INC)<br>* Seite 1, Zeile 25 - Seite 4, Zeile 5 *<br>* Beispiele 4-8 *<br>--- | 1,5,8<br>3 | G02F1/35 |
| X<br>Y | WO-A-94 20881 (ALLIED SIGNAL INC)<br>* Seite 2, Zeile 1 - Seite 3, Zeile 26 *<br>* Seite 5, Zeile 16 - Seite 8, Zeile 2 *<br>* Seite 12, Zeile 21 - Seite 16, Zeile 14 *<br>----- | 1,5,8<br>3 | |

RECHERCHIERTE SACHGEBIETE (Int.Cl.6)

G02F

## UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.
Vollständig recherchierte Patentansprüche:
Unvollständig recherchierte Patentansprüche:
Nicht recherchierte Patentansprüche:
Grund für die Beschränkung der Recherche:

Siehe Ergänzungsblatt C

| Recherchenort | Abschlußdatum der Recherche | Prüfer |
|---|---|---|
| DEN HAAG | 15.Januar 1997 | Boulon, A |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C09)